(19)

Europäisches
Patentamt
European
Patent Office
Office européen
des brevets

(11) **EP 4 676 028 A1**

(12) **EUROPEAN PATENT APPLICATION**
published in accordance with Art. 153(4) EPC

(43) Date of publication:
**07.01.2026 Bulletin 2026/02**

(21) Application number: **23931517.9**

(22) Date of filing: **07.04.2023**

(51) International Patent Classification (IPC):
*H04N 19/105* (2014.01)

(52) Cooperative Patent Classification (CPC):
**H04N 19/105**

(86) International application number:
**PCT/CN2023/086968**

(87) International publication number:
**WO 2024/207456 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **SUN, Zexing
Dongguan, Guangdong 523860 (CN)**

(74) Representative: **RGTH
Patentanwälte PartGmbB
Neuer Wall 10
20354 Hamburg (DE)**

(54) **METHOD FOR ENCODING AND DECODING, ENCODER, DECODER, CODE STREAM, AND STORAGE MEDIUM**

(57)     The embodiments of the present application provide a method for encoding and decoding. The method comprises: a codec determining a first reference unit corresponding to a to-be-processed unit in a reference frame corresponding to a current frame according to said unit in the current frame; and determining an attribute prediction value corresponding to said unit according to attribute information corresponding to the first reference unit.

```
┌─────────────────────────────────────────────────────────┐
│ Determine, based on a to-be-processed unit in a current  │── 101
│ frame, a first reference unit corresponding to the       │
│ to-be-processed unit from a reference frame              │
│ corresponding to the current frame                       │
└─────────────────────────────────────────────────────────┘
                            │
                            ▼
┌─────────────────────────────────────────────────────────┐
│ Determine, based on attribute information corresponding  │── 102
│ to the first reference unit, an attribute prediction     │
│ value corresponding to the to-be-processed unit          │
└─────────────────────────────────────────────────────────┘
```

FIG. 40

**Description**

**TECHNICAL FIELD**

Embodiments of this application relate to the field of point cloud compression technologies, and in particular, to an encoding method, a decoding method, an encoder, a decoder, a bitstream, and a storage medium.

**BACKGROUND**

In a geometry-based point cloud compression (Geometry-based Point Cloud Compression, G-PCC) encoding and decoding framework or a video-based point cloud compression (Video-based Point Cloud Compression, V-PCC) encoding and decoding framework provided by a moving picture experts group (Moving Picture Experts Group, MPEG), geometric information and attribute information of a point cloud are encoded separately. In a related technology, for attribute inter prediction of G-PCC, attribute redundancy between neighboring frames cannot be effectively removed, resulting in relatively low attribute encoding efficiency.

**SUMMARY**

Embodiments of this application provide an encoding method, a decoding method, an encoder, a decoder, a bitstream, and a storage medium, which can effectively remove attribute redundancy between neighboring frames, improve attribute encoding and decoding efficiency of a point cloud, and enhance encoding and decoding performance of the point cloud.

The technical solutions in embodiments of this application may be implemented as follows.

According to a first aspect, an embodiment of this application provides a decoding method, applied to a decoder, where the method includes:

determining, based on a to-be-processed unit in a current frame, a first reference unit corresponding to the to-be-processed unit from a reference frame corresponding to the current frame; and
determining, based on attribute information corresponding to the first reference unit, an attribute prediction value corresponding to the to-be-processed unit.

According to a second aspect, an embodiment of this application provides an encoding method, applied to an encoder, where the method includes:

determining, based on a to-be-processed unit in a current frame, a first reference unit corresponding to the to-be-processed unit from a reference frame corresponding to the current frame; and
determining, based on attribute information corresponding to the first reference unit, an attribute prediction value corresponding to the to-be-processed unit.

According to a third aspect, an embodiment of this application provides an encoder, where the encoder includes a first determining unit, where
the first determining unit is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

According to a fourth aspect, an embodiment of this application provides an encoder, where the encoder includes a first memory and a first processor, where

the first memory is configured to store a computer program runnable on the first processor; and
the first processor is configured to execute the method according to the second aspect when running the computer program.

According to a fifth aspect, an embodiment of this application provides a decoder, where the decoder includes a second determining unit, where
the second determining unit is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

According to a sixth aspect, an embodiment of this application provides a decoder, where the decoder includes a second memory and a second processor, where

the second memory is configured to store a computer program runnable on the second processor; and
the second processor is configured to execute the method according to the first aspect when running the computer program.

According to a seventh aspect, an embodiment of this application provides a bitstream, where the bitstream is generated by performing bit encoding according to to-be-encoded information, where the to-be-encoded information includes at least prediction mode identification information, a prediction residual, and reference unit identification information.

According to an eighth aspect, an embodiment of this application provides a computer-readable storage medium, where the computer-readable storage medium stores a computer program, and when the computer program is executed, the method according to the first aspect or the method according to the second aspect is implemented.

Embodiments of this application provide an encoding method, a decoding method, an encoder, a decoder, a bitstream, and a storage medium. A codec determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

## BRIEF DESCRIPTION OF DRAWINGS

FIG. 1A is a schematic diagram of a three-dimensional point cloud image according to an embodiment of this application.

FIG. 1B is a schematic diagram of a locally enlarged view of the three-dimensional point cloud image according to an embodiment of this application.

FIG. 2A is a schematic diagram of a point cloud image viewed from different angles according to an embodiment of this application.

FIG. 2B is a schematic diagram of a data storage format corresponding to FIG. 2A according to an embodiment of this application.

FIG. 3 is a schematic diagram of a network architecture for point cloud encoding and decoding according to an embodiment of this application.

FIG. 4A is a schematic diagram of a framework of a G-PCC encoder according to an embodiment of this application.

FIG. 4B is a schematic diagram of a framework of a G-PCC decoder according to an embodiment of this application.

FIG. 5A is a schematic diagram of low planar positions in a Z-axis direction according to an embodiment of this application.

FIG. 5B is a schematic diagram of high planar positions in a Z-axis direction according to an embodiment of this application.

FIG. 6 is a schematic diagram of a node coding sequence according to an embodiment of this application.

FIG. 7A is a schematic diagram 1 of planar mode information according to an embodiment of this application.

FIG. 7B is a schematic diagram 2 of planar mode information according to an embodiment of this application.

FIG. 8 is a schematic diagram of sibling nodes of a current node according to an embodiment of this application.

FIG. 9 is a schematic diagram of intersection between lasers of a LiDAR device and a node according to an embodiment of this application.

FIG. 10 is a schematic diagram of neighboring nodes at a same partitioning depth and a same coordinate.

FIG. 11 is a schematic diagram showing that a current node is located on a low plane of a parent node.

FIG. 12 is a schematic diagram showing that a current node is located on a high plane of a parent node.

FIG. 13 is a schematic diagram of predictive encoding of planar position information of a LiDAR point cloud.

FIG. 14 is a schematic diagram of coding in an infer direct coding mode.

FIG. 15 is a schematic diagram of coordinate transform of a point cloud acquired by a rotating LiDAR device.

FIG. 16 is a schematic diagram of predictive encoding.

FIG. 17 is a schematic diagram 1 of predicting an angle by using a horizontal azimuth.

FIG. 18 is a schematic diagram 2 of predicting an angle by using a horizontal azimuth.

FIG. 19 is a schematic diagram of predictive encoding on an X-axis or a Y-axis.

FIG. 20 is a schematic diagram of geometric information reconstruction of a block.

FIG. 21 is a schematic diagram of distance-based LOD construction.

FIG. 22 shows a visualized result of LOD.

FIG. 23 is a flowchart of G-PCC attribute prediction.

FIG. 24 is a schematic diagram of LOD partitioning.

FIG. 25 is a schematic diagram 1 of inter-layer nearest neighbor search.

FIG. 26 is a schematic diagram 2 of inter-layer nearest neighbor search.

FIG. 27 is a schematic diagram 1 of a spatial relationship.

FIG. 28 is a schematic diagram 2 of a spatial relationship.

FIG. 29 is a schematic diagram 1 of a fast search algorithm.

FIG. 30 is a schematic diagram of intra-layer attribute nearest neighbor search.

FIG. 31 is a schematic diagram 2 of a fast search algorithm.

FIG. 32 is a schematic diagram 3 of a fast search algorithm.

FIG. 33 is a schematic diagram 4 of a fast search algorithm.

FIG. 34 is a flowchart of lifting transform.

FIG. 35 is a schematic diagram of a process of RAHT transform in three directions $x$, $y$, and $z$.

FIG. 36 is a schematic diagram of RAHT transform.

FIG. 37 is a schematic diagram of RAHT transform.

FIG. 38 is a schematic diagram of inverse RAHT transform.

FIG. 39 is a schematic diagram of slice-based attribute prediction.

FIG. 40 is a schematic flowchart of a decoding method according to an embodiment of this application.

FIG. 41 is a schematic diagram of a to-be-processed unit of a current frame.

FIG. 42 is a schematic diagram 1 of a first reference unit.

FIG. 43 is a schematic diagram of a second reference unit.

FIG. 44 is a schematic diagram 2 of a first reference unit.

FIG. 45 is a schematic diagram 3 of a first reference unit.

FIG. 46 is a schematic diagram 4 of a first reference unit.

FIG. 47 is a schematic diagram 5 of a first reference unit.

FIG. 48 is a schematic diagram 1 of attribute inter prediction.

FIG. 49 is a schematic diagram 2 of attribute inter prediction.

FIG. 50 is a schematic diagram 3 of attribute inter prediction.

FIG. 51 is a schematic diagram 4 of attribute inter prediction.

FIG. 52 is a schematic flowchart of an encoding method according to an embodiment of this application.

FIG. 53 is a schematic structural diagram 1 of an encoder.

FIG. 54 is a schematic structural diagram 2 of an encoder.

FIG. 55 is a schematic structural diagram 1 of a decoder.

FIG. 56 is a schematic structural diagram 2 of a decoder.

## DESCRIPTION OF EMBODIMENTS

To understand features and technical content of embodiments of this application in more detail, the following describes implementation of embodiments of this application in detail with reference to the accompanying drawings. The accompanying drawings are merely used for description, and are not intended to limit embodiments of this application.

Unless otherwise defined, all technical and scientific terms used in this specification have the same meaning as commonly understood by those skilled in the technical field of this application. The terms used herein are merely for the purpose of describing embodiments of this application, but are not intended to limit this application.

In the following descriptions, the term "some embodiments" describes a subset of all possible embodiments, but it may be understood that "some embodiments" may be the same subset or different subsets of all possible embodiments and may be combined without a conflict.

It should also be noted that the term "first/second/third" used in embodiments of this application is merely used to distinguish between similar objects and does not represent a specific order of objects. It may be understood that "first/second/third" may be interchanged if allowed, so that embodiments of this application described herein may be implemented in a sequence other than the sequence illustrated or described herein.

A point cloud (Point Cloud) is a three-dimensional representation of a surface of an object. By using a collection device such as an optoelectronic radar, a LiDAR device, a laser scanner, or a multi-angle camera, a point cloud (data) of a surface of an object may be collected.

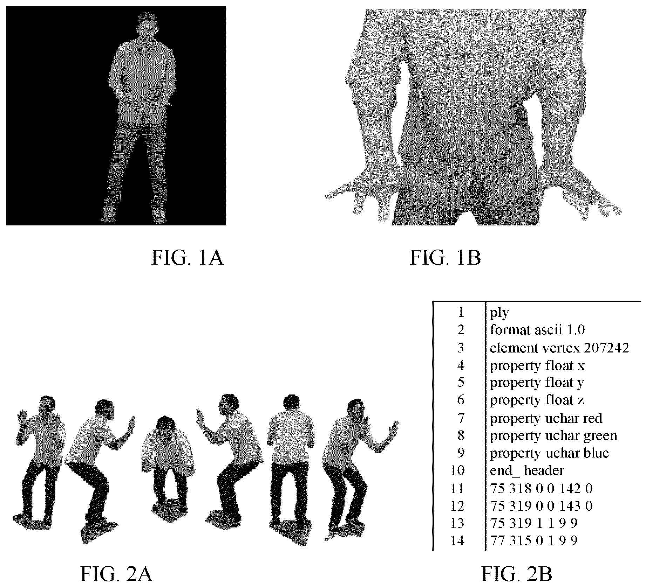

The point cloud is a set of discrete points in space that are irregularly distributed and represent a spatial structure and surface attributes of a three-dimensional object or scene. FIG. 1A is a three-dimensional point cloud image, and FIG. 1B is a locally enlarged view of the three-dimensional point cloud image. It can be seen that a surface of the point cloud includes densely distributed points.

Samples of a two-dimensional image each express some information and follow a distribution rule. Therefore, position information of the two-dimensional image does not need to be additionally recorded. However, points in a point cloud in a three-dimensional space are randomly and irregularly distributed. Therefore, a position of each point in the space needs to be recorded, to fully express the point cloud. Similar to that in the two-dimensional image, in a collection process, each position has corresponding attribute information, which is usually an RGB color value. The color value reflects a color of an object. For the point cloud, in addition to color information, attribute information corresponding to each point generally includes a reflectance (reflectance) value. The reflectance value reflects a surface material of the object. Therefore, point cloud data generally includes geometric information formed by three-dimensional position information, three-dimensional color information, and attribute information formed by one-dimensional reflectance information. A point in the point cloud may have position information of the point and attribute information of the point. For example, the position information of the point may be three-dimensional coordinate information (x, y, z) of the point. The position information of the point may also be referred to as geometric information of the point. For example, the attribute information of the point may include color information (three-dimensional color information), and/or reflectance (one-dimensional reflectance information r). For example, the color information may be information in any type of color space. For example, the color information may be RGB information, where R represents red (Red, R), G represents green (Green, G), and B represents blue (Blue, B). For another example, the color information may be luma and chroma (YCbCr, YUV) information, where Y represents luma (Luma), Cb(U) represents a blue color difference, and Cr(V) represents a red color difference.

A point in a point cloud obtained according to a laser measurement principle may have three-dimensional coordinate information of the point and a reflectance value of the point. For another example, a point in a point cloud obtained according to a photographing measurement principle may have three-dimensional coordinate information of the point and three-dimensional color information of the point. For another example, a point in a point cloud obtained according to a laser measurement principle and a photographing measurement principle may have three-dimensional coordinate information of the point, a reflectance value of the point, and three-dimensional color information of the point.

FIG. 2A and FIG. 2B show a point cloud image and a data storage format corresponding to the point cloud image. FIG. 2A provides six angles of viewing a point cloud image, and FIG. 2B includes a file header information part and a data part. Header information includes a data format, a data representation type, a total quantity of points in a point cloud, and content represented by the point cloud. For example, the point cloud is in a ".ply" format and is represented by an ASCII code. The total quantity of the points in the point cloud is 207242, and each point has three-dimensional coordinate information (x, y, z) and three-dimensional color information (r, g, b).

According to acquisition methods, point clouds may be classified into the following three types:

static point cloud, for which an object is still, and a device for acquiring the point cloud is also still;
dynamic point cloud, for which an object is moving, but a device for acquiring the point cloud is still; and
dynamically acquired point cloud, for which a device for acquiring the point cloud is moving.

For example, according to usage, point clouds are classified into the following two types:

type 1: machine perception point cloud, which may be used in scenarios such as an autonomous navigation system, a real-time inspection system, a geographic information system, a visual sorting robot, or a disaster relief robot; and
type 2: human eye perception point cloud, which may be used in point cloud application scenarios such as a digital cultural heritage, free viewpoint broadcasting, three-dimensional immersive communication, or three-dimensional immersive interaction.

A point cloud may flexibly and conveniently express a spatial structure and a surface attribute of a three-dimensional object or scene. Since the point cloud is obtained by directly performing sampling on a real object, an extremely strong sense of reality can be provided on a premise of ensuring precision. Therefore, the point cloud is widely applied in virtual reality gaming, computer-aided design, a geographic information system, an automatic navigation system, a digital cultural legacy, free viewpoint broadcasting, three-dimensional immersive remote presentation, three-dimensional reconstruction of a biological organ, and the like.

Point clouds are mainly collected in the following manners: computer generation, 3D laser scanning, 3D photographing measurement, and the like. A computer may be used to generate a point cloud of a virtual three-dimensional object or scene. 3D laser scanning may be used to obtain a point cloud of a three-dimensional object or scene in a static real world, and can acquire millions of point clouds per second. 3D photographing measurement may be used to obtain a point cloud of a three-dimensional object or scene in a dynamic real world, and can acquire tens of millions of point clouds per second. These technologies reduce costs and a time period of acquiring point cloud data, and improve data precision. The development in the manners of acquiring point cloud data makes it possible to acquire a large amount of point cloud data. With increasing application requirements, processing of massive 3D point cloud data encounters bottlenecks of limited storage space and transmission bandwidth.

Exemplarily, a point cloud video with a frame rate of 30 frames per second (fps) is used as an example. A quantity of points in each frame of point cloud is 700,000, and each point has coordinate information xyz (float) and color information RGB (uchar). In this case, a data volume of a 10s of point cloud video is approximately 0.7 million $\times$ (4 byte $\times$ 3 + 1 byte $\times$ 3) $\times$ 30 fps $\times$ 10s = 3.15 GB, where 1 byte is 8 bits. A data volume of a 10s 1280 $\times$ 720 two-dimensional video with a YUV sampling format of 4:2:0 and a frame rate of 24 fps is approximately 1280 $\times$ 720 $\times$ 12 bit $\times$ 24 fps $\times$ 10s $\approx$ 0.33 GB, and a data volume of a 10s of two-view three-dimensional video is approximately 0.33 $\times$ 2 = 0.66 GB. It can be seen that a data volume of a point cloud video is far more than a data volume of a two-dimensional or three-dimensional video with a same length. Therefore, to better implement data management, save server storage space, and reduce transmission traffic and transmission time between servers and clients, point cloud compression becomes a key for promoting development of point cloud industries.

That is, since a point cloud is a set of massive points, storing the point cloud not only consumes a large amount of memory but also is non-conducive to transmission. In addition, there is no such bandwidth that can support direct transmission of a point cloud at a network layer without compression. Therefore, the point cloud needs to be compressed.

Currently, a point cloud encoding framework that can be used to compress a point cloud may be a geometry-based point cloud compression (Geometry-based Point Cloud Compression, G-PCC) encoding and decoding framework or a video-based point cloud compression (Video-based Point Cloud Compression, V-PCC) encoding and decoding framework provided by a moving picture experts group (Moving Picture Experts Group, MPEG), or may be an AVS-PCC encoding and decoding framework provided by an AVS. The G-PCC encoding and decoding framework may be used to compress a static point cloud of the type 1 and a dynamically acquired point cloud of the type 3, and the V-PCC encoding and decoding framework may be used to compress a dynamic point cloud of the type 2. The G-PCC encoding and decoding framework is also referred to as a point cloud codec TMC13, and the V-PCC encoding and decoding framework is also referred to as a point cloud codec TMC2.

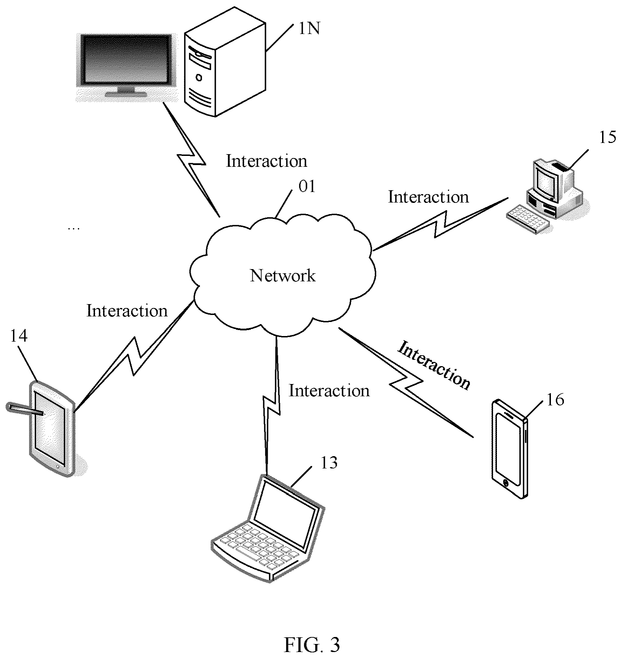

Embodiments of this application provide a network architecture of a point cloud encoding and decoding system that includes a decoding method and an encoding method. FIG. 3 is a schematic diagram of a network architecture for point cloud encoding and decoding according to an embodiment of this application. As shown in FIG. 3, the network architecture includes one or more electronic devices 13 to 1N and a communications network 01, where the electronic devices 13 to 1N may perform video interaction with each other by using the communications network 01. In an implementation process, the electronic device may be various types of devices that have a point cloud encoding and decoding function. For example, the electronic device may include a mobile phone, a tablet computer, a personal computer, a personal digital assistant, a navigator, a digital telephone, a video telephone, a television, a sensing device, a server, or the like. This is not limited in embodiments of this application. A decoder or an encoder in embodiments of this application may be the foregoing electronic device.

The electronic device in embodiments of this application has a point cloud encoding and decoding function, and generally includes a point cloud encoder (that is, an encoder) or a point cloud decoder (that is, a decoder).

The following describes a point cloud compression technology by using a G-PCC encoding and decoding framework as an example.

It may be understood that, in a G-PCC encoding and decoding framework for a point cloud, to-be-encoded point cloud data is first partitioned into a plurality of slices through slicing (slice). In each slice, geometric information and attribute information of the point cloud are separately encoded.

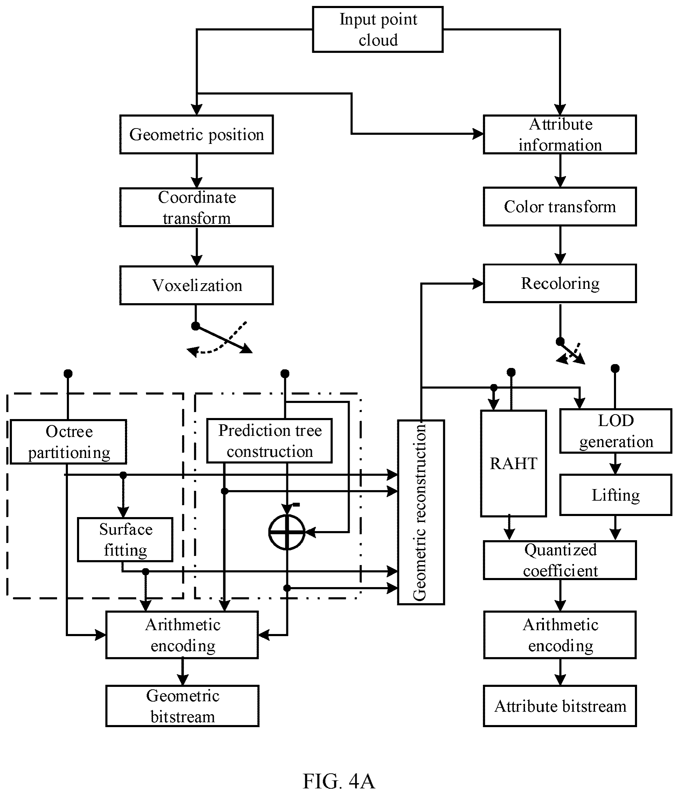

FIG. 4A is a schematic diagram of a framework of a G-PCC encoder. As shown in FIG. 4A, in a geometry encoding process, coordinate transform is performed on geometric information, so that an entire point cloud is included in a bounding box (Bounding Box), and then quantization is performed. The quantization in this step mainly plays a role of scaling. Due to rounding in the quantization, a part of the point cloud has same geometric information. Then, whether to remove duplicate points is determined based on a parameter. The process of quantization and removal of duplicate points is also referred to as voxelization. Next, octree partitioning or prediction tree construction is performed on the bounding box. In this process, arithmetic encoding is performed on points in leaf nodes generated by partitioning, to generate a binary geometric bitstream; or arithmetic encoding (surface fitting based on vertices) is performed on vertices (Vertex) generated by partitioning, to generate a binary geometric bitstream. In an attribute encoding process, geometry encoding is already completed. After the geometric information is reconstructed, color transform needs to be performed first, to transform color information (that is, attribute information) from an RGB color space to a YUV color space. Then, the point cloud is colored again by using the reconstructed geometric information, so that attribute information that is not encoded corresponds to the reconstructed geometric information. Attribute encoding is mainly performed on color information. In a process of encoding the color information, there are mainly two transform methods. One method is distance-based lifting transform that depends on level of detail (Level of Detail, LOD) partitioning, and the other method is to directly perform region adaptive hierarchal transform (Region Adaptive Hierarchal Transform, RAHT). In both methods, the color information is transformed from a spatial domain to a frequency domain, to obtain a high frequency coefficient and a low frequency coefficient. Finally, the coefficients are quantized to obtain quantized coefficients, and then arithmetic encoding is performed on the quantized coefficients to generate a binary attribute bitstream.

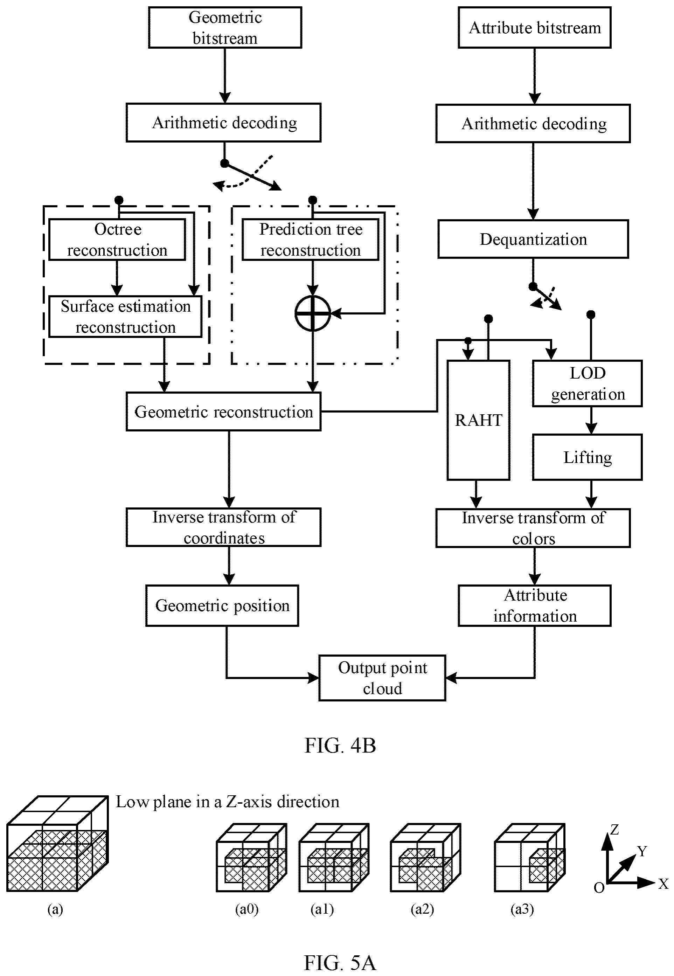

FIG. 4B is a schematic diagram of a framework of a G-PCC decoder. As shown in FIG. 4B, for an acquired binary bitstream, a geometric bitstream and an attribute bitstream in the binary bitstream are first separately decoded. During decoding of the geometric bitstream, geometric information of the point cloud is obtained through arithmetic decoding - octree reconstruction or prediction tree reconstruction - geometric reconstruction - inverse transform of coordinates. During decoding of the attribute bitstream, attribute information of the point cloud is obtained through arithmetic decoding - dequantization - LOD partitioning or RAHT - inverse transform of colors. Based on the geometric information and the attribute information, to-be-encoded point cloud data (that is, the output point cloud) is restored.

It should be noted that, as shown in FIG. 4A or FIG. 4B, currently G-PCC geometry encoding and decoding may include octree geometry encoding and decoding (shown in a dashed box) and predictive geometry encoding and decoding (shown in a dash-dotted box).

Octree geometry encoding (Octree geometry encoding, OctGeomEnc) includes the following steps. First, coordinate transform is performed on geometric information, so that an entire point cloud is included in a bounding box. Then, quantization is performed. The quantization in this step mainly plays a role of scaling. Due to rounding in the quantization, some points have same geometric information. Then, whether to remove duplicate points is determined based on a parameter. The process of quantization and removal of duplicate points is also referred to as voxelization. Next, partitioning of a tree (for example, an octree, a quadtree, or a binary tree) is continuously performed on the bounding box in a breadth-first traversal sequence, and an occupancy code of each node is encoded. In a related technology, a company proposes an implicit geometric partitioning manner. First, a bounding box $(2^{d_x}, 2^{d_y}, 2^{d_z})$ of a point cloud is calculated. It is assumed that $d_x > d_y > d_z$, and the bounding box is correspondingly a cube. During geometric partitioning, first, binary tree partitioning is continuously performed based on an x-axis, to continuously obtain two child nodes. Only when a condition $d_x = d_y > d_z$ is met, quadtree partitioning is continuously performed based on the x-axis and a y-axis, to continuously obtain four child nodes. When a condition $d_x = d_y = d_z$ is finally met, octree partitioning is continuously performed until leaf nodes obtained by the partitioning are $1 \times 1 \times 1$ unit cubes. Then, points in the leaf nodes are encoded, to generate a binary bitstream. In a process of partitioning based on a binary tree, a quadtree, or an octree, two parameters K and M are introduced. The parameter K indicates a maximum quantity of times of binary tree or quadtree partitioning before octree partitioning, and the parameter M is used to indicate that a side length of a minimum block corresponding to binary tree or quadtree partitioning is $2^M$. In addition, K and M must meet the following condition: assuming that $d_{max} = \max(d_x, d_y, d_z)$, $d_{min} = \min(d_x, d_y, d_x)$, the parameter K meets $K >= d_{max} - d_{min}$ and the parameter M meets $M >= d_{min}$. A reason why the parameters K and M meet the foregoing condition is that, in the current implicit geometric partitioning of G-PCC, partitioning manners in descending order of priorities are binary tree partitioning, quadtree partitioning, and octree partitioning. Only when a size of a node block does not meet a condition of binary tree or quadtree partitioning, octree partitioning is continuously performed on the node until leaf nodes of a minimum unit $1 \times 1 \times 1$ are obtained. In an octree geometry encoding mode, geometric information of a point cloud may be effectively encoded by using correlation between adjacent points in space. However, for some relatively flat nodes or nodes that have a planar feature, encoding efficiency of the geometric information of the point cloud may be further improved by using a plane coding mode.

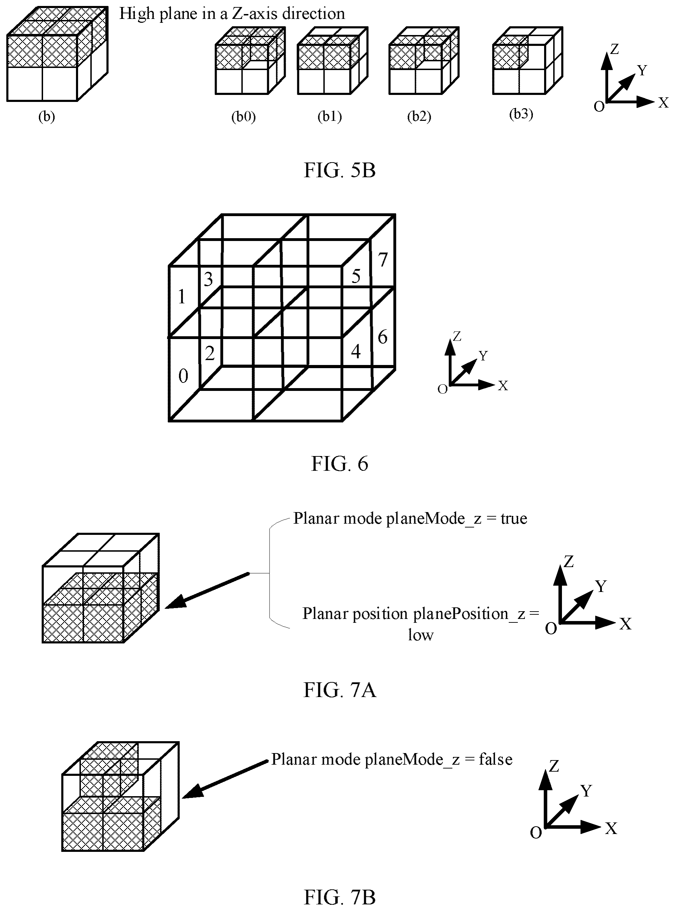

Exemplarily, FIG. 5A and FIG. 5B are schematic diagrams of planar positions. FIG. 5A is a schematic diagram of low planar positions in a Z-axis direction, and FIG. 5B is a schematic diagram of high planar positions in a Z-axis direction. As shown in FIG. 5A, (a), (a0), (a1), (a2), and (a3) herein all belong to low planar positions in a Z-axis direction. By using (a) as an example, it can be seen that four occupied child nodes in a current node are all located in low planar positions in a Z-axis direction of the current node. In this case, it may be considered that the current node belongs to a Z-plane that is a low plane in the Z-axis direction. Similarly, as shown in FIG. 5B, (b), (b0), (b1), (b2), and (b3) herein all belong to high planar positions in a Z-axis direction. By using (b) as an example, it can be seen that four occupied child nodes in a current node are located in high planar positions in a Z-axis direction of the current node. In this case, it may be considered that the current node belongs to a Z-plane that is a high plane in the Z-axis direction.

Further, octree coding efficiency is compared against plane coding efficiency. FIG. 6 is a schematic diagram of a node coding sequence, that is, node coding is performed in a sequence of 0, 1, 2, 3, 4, 5, 6, and 7 shown in FIG. 6. Herein, if an octree coding manner is used for (a) in FIG. 5A, occupancy information of the current node is represented as 11001100. However, if a plane coding manner is used, first, an identifier needs to be encoded, to indicate that the current node is a plane in the Z-axis direction. Then, if the current node is a plane in the Z-axis direction, a planar position of the current node also needs to be represented. Next, only occupancy information (that is, occupancy information of four child nodes 0, 2, 4, and 6) of low-plane nodes in the Z-axis direction needs to be encoded. Therefore, if the current node is encoded based on the plane coding manner, only six bits (bit) need to be encoded. Compared with octree coding in a related technology, plane coding reduces representation by two bits. Based on this analysis, plane coding has more evident coding efficiency than octree coding. Therefore, for an occupied node, if a plane coding manner is used for coding in a dimension, first, planar mode (planarMode) information and planar position (PlanePos) of the current node in the dimension need to be represented. Then, occupancy information of the current node is encoded based on planar information of the current node. Exemplarily, FIG. 7A is a schematic diagram 1 of planar mode information. As shown in FIG. 7A, a low plane exists in the Z-axis direction. Correspondingly, a value of planar mode information is true (true) or 1, that is, planarMode_Z = true. A value of planar position information is low (low), that is, PlanePosition_Z = low. FIG. 7B is a schematic diagram of another piece of planar mode information. As shown in FIG. 7B, it is not a plane in the Z-axis direction. Correspondingly, a value of planar mode information is false (false) or 0, that is, planarMode_Z = false.

It should be noted that, for PlaneMode_i, 0 represents that a current node is not a plane in an i-axis direction, and 1 represents that the current node is a plane in the i-axis direction. If the current node is a plane in the i-axis direction, for PlanePosition_i, 0 indicates that the current node is a low plane in the i-axis direction, and 1 indicates that the current node is a high plane in the i-axis direction. Herein, i represents a coordinate dimension, which may be an X-axis direction, a Y-axis direction, or a Z-axis direction. Therefore, i = 0, 1, or 2.

In a G-PCC standard, whether a node meets a plane coding condition is determined. When the node meets the plane coding condition, predictive encoding is performed on plane mode information and planar position information of the node.

In a current G-PCC standard, there are three conditions for determining whether a node meets a plane coding condition. The following describes the conditions in detail one by one.

1. Determine whether a node meets a plane coding condition based on a plane probability of the node in each dimension.

(1) Determine a local node density (local_node_density) of the current node.
(2) Determine a probability Prob(i) of the current node in each dimension.

When the local node density of the node is less than a threshold value Th (for example, Th = 3), a plane probability Pro(i) of the current node in each of three coordinate dimensions is compared against a threshold Th0, Th1, or Th2, where Th0 < Th1 < Th2 (for example, Th0 = 0.6, Th1 = 0.77, and Th2 = 0.88). Herein, Eligible$i(i = 0,1,2)$ may be used to indicate whether to enable plane coding in a respective dimension:

$$\text{Eligible}i = \text{Prob}(i) \geq \text{threshold}.$$

It should be noted that, the threshold changes adaptively. For example, when Prob(0) > Prob(1) > Prob(2), Eligible$i$ is set as follows:

$$\text{Eligible}_0 = \text{Prob}(0) \geq \text{Th0};$$

$$\text{Eligible}_1 = \text{Prob}(1) \geq \text{Th1};$$

$$\text{Eligible}_2 = \text{Prob}(2) \geq \text{Th2}.$$

When Prob(1) > Prob(0) > Prob(2), Eligible$i$ is set as follows:

$$\text{Eligible}_0 = \text{Prob}(0) \geq \text{Th1};$$

$$\text{Eligible}_1 = \text{Prob}(1) \geq \text{Th0};$$

$$\text{Eligible}_2 = \text{Prob}(2) \geq \text{Th2}.$$

Herein, Prob(i) is updated specifically as follows:

$$\text{Prob(i)}_{\text{new}} = (L \times \text{Prob(i)} + \delta(\text{coded node}))/L + 1 \qquad (1)$$

Herein, L = 255. In addition, if a coded node is a plane, $\delta$(coded node) is 1. Otherwise, $\delta$(coded node) is 0.

Herein, local_node_density is updated specifically as follows:

$$\text{local\_node\_density}_{\text{new}} = \text{local\_node\_density} + 4 \times \text{numSiblings} \qquad (2)$$

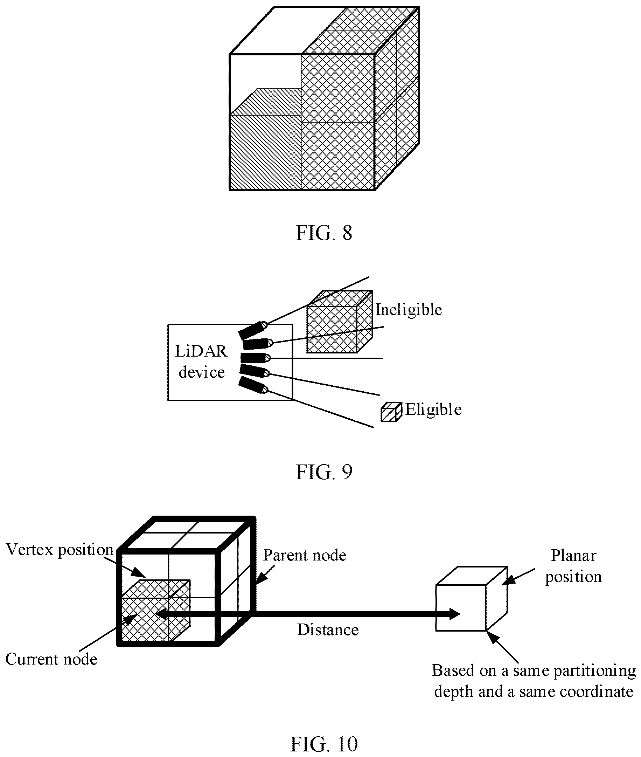

Herein, Local_node_density is initialized to 4, and numSiblings is a quantity of sibling nodes of the node. Exemplarily, FIG. 8 is a schematic diagram of sibling nodes of a current node according to an embodiment of this application. As shown in FIG. 8, if the current node is a node filled with slanting lines, and nodes filled with grids are sibling nodes, a quantity of the sibling nodes of the current node is 5 (including the current node).

2. Determine, based on a point cloud density of a current layer, whether a node at the current layer meets a plane coding condition.

A point density of the current layer is used to determine whether to perform plane coding on the node at the current layer. A quantity of points in a currently to-be-encoded point cloud is represented as pointCount, and a quantity of points that have been reconstructed through infer direct mode coding (Infer Direct Mode Coding, IDCM) coding is represented as numPointCountRecon. In addition, because octree coding is performed based on a breadth-first traversal sequence, a quantity of to-be-encoded nodes at the current layer, which is represented as nodeCount, may be obtained. In this case, whether plane coding is enabled for the current layer is represented as planarEligibleKOctreeDepth, which is determined specifically as planarEligibleKOctreeDepth = (pointCount - numPointCountRecon) < nodeCount $\times$ 1.3.

If (pointCount - numPointCountRecon) is less than nodeCount $\times$ 1.3, planarEligibleKOctreeDepth is true, or if (pointCount - numPointCountRecon) is not less than nodeCount $\times$ 1.3, planarEligibleKOctreeDepth is false. In this way, when planarEligibleKOctreeDepth is true, plane coding is performed on all nodes at the current layer. Otherwise, plane coding is not performed on any node at the current layer, and only octree coding is used.

3. Determine, based on a collection parameter of a LiDAR point cloud, whether a current node meets a plane coding condition.

FIG. 9 is a schematic diagram of intersection between lasers of a LiDAR device and a node according to an embodiment of this application. As shown in FIG. 9, a grid-filled node is simultaneously passed through by rays of two lasers (Laser). Therefore, a current node is not a plane in a vertical Z-axis direction. A node filled with slanting lines is so small that the node cannot be simultaneously passed through by rays of two lasers. Therefore, the green node may be a plane in the vertical Z-axis direction.

Further, for a node that meets a plane coding condition, predictive encoding may be performed on planar mode information and planar position information.

First, predictive encoding is performed on the planar mode information.

Herein, only three pieces of context information are used for encoding, that is, context is designed separately for a plane mode in each coordinate dimension.

Second, predictive encoding is performed on the planar position information.

It should be understood that, for encoding of planar position information of a non-LiDAR point cloud, in a related technology, existing reference context information may include:

(a) planar position information of the current node that is obtained through prediction by using occupancy information of the neighboring node, which includes three elements, that is, being predicted as a low plane, being predicted as a high plane, and being unpredictable;
(b) the spatial distance between the current node and the node at the same partitioning depth and the same coordinate as the current node, which is "short" or "long";
(c) if the node at the same partitioning depth and the same coordinate as the current node is a plane, a planar position of the node is determined; and
(d) coordinate dimensions (i = 0, 1, 2).

Exemplarily, FIG. 10 is a schematic diagram of a neighboring node at a same partitioning depth and a same coordinate. As shown in FIG. 10, a current node is a grid-filled small cube, and a neighboring node is searched for at a same octree partitioning depth level and a same vertical coordinate. The neighboring node is a small cube filled with the white color. It is determined that a distance between the two nodes is "short" or "long", and the planar position of the node is referred to.

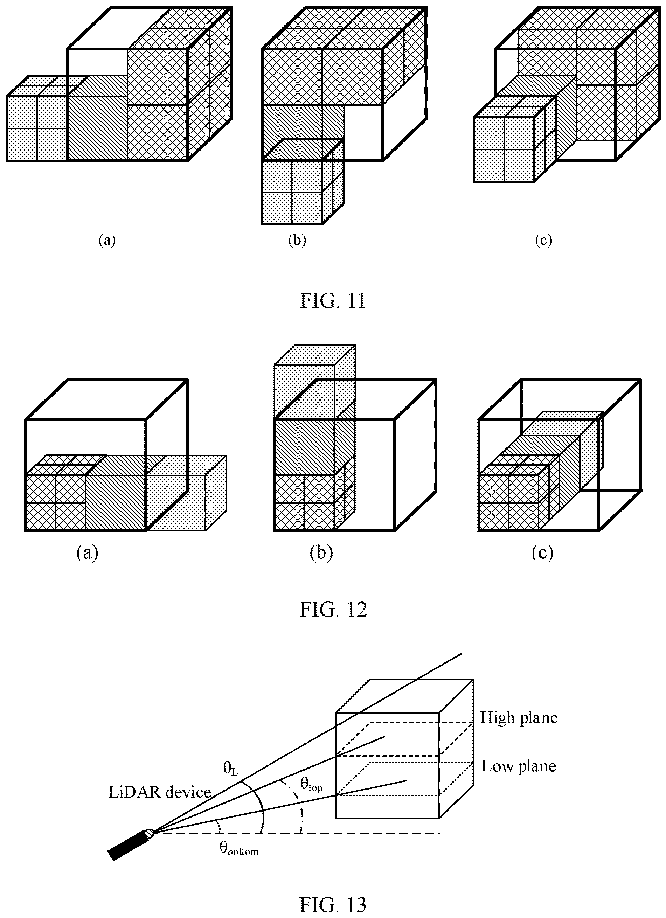

FIG. 11 is a schematic diagram showing that a current node is located on a low plane of a parent node according to an embodiment of this application. As shown in FIG. 11, (a), (b), and (c) show examples of three cases in which the current node is located on a low plane of the parent node. Detailed descriptions are as follows.

① If any one of child nodes 4 to 7 of a point-filled node is occupied, and none of grid-filled nodes is occupied, it is very likely that a plane exists in the current node (filled with slanting lines), and a position of the plane is relatively low.

② If none of child nodes 4 to 7 of a point-filled node is occupied, and all grid-filled nodes are occupied, it is very likely that a plane exists in the current node (filled with slanting lines), and a position of the plane is relatively high.

③ If all child nodes 4 to 7 of a point-filled node are empty nodes, and all grid-filled nodes are empty nodes, a position of the plane cannot be inferred and therefore is marked as unknown.

④ If any one of child nodes 4 to 7 of a point-filled node is occupied, and any one of grid-filled nodes is occupied, a position of the plane cannot be inferred and therefore is marked as unknown.

FIG. 12 is a schematic diagram showing that a current node is located on a high plane of a parent node according to an embodiment of this application. As shown in FIG. 12, (a), (b), and (c) show examples of three cases in which the current node is located on a high plane of the parent node. Detailed descriptions are as follows.

① If any one of child nodes 4 to 7 of a grid-filled node is occupied, and a point-filled node is not occupied, it is very likely that a plane exists in the current node (filled with slanting lines), and a position of the plane is relatively low.

② If none of child nodes 4 to 7 of a grid-filled node is occupied, and a point-filled node is occupied, it is very likely that a plane exists in the current node (filled with slanting lines), and a position of the plane is relatively high.

③ If none of child nodes 4 to 7 of a grid-filled node is occupied, and a point-filled node is not occupied, a position of the plane cannot be inferred and therefore is marked as unknown.

④ If one of child nodes 4 to 7 of a grid-filled node is occupied, and a point-filled node is occupied, a position of the plane cannot be inferred and therefore is marked as unknown.

It should be further understood that, for encoding of planar position information of a LiDAR point cloud, FIG. 13 is a schematic diagram of predictive encoding of planar position information of a LiDAR point cloud. As shown in FIG. 13, a case in which an emission angle of a LiDAR device is $\theta_{bottom}$ may be mapped to a bottom plane (Bottom virtual plane), or a case in which the emission angle of the LiDAR device is $\theta_{top}$ may be mapped to a top plane (Top virtual plane).

That is, a planar position of a current node is predicted by using a collection parameter of the LiDAR device. Then, the position is quantized into a plurality of intervals by using a position at which the current node intersects a laser ray, and finally serves as context information of the planar position of the current node. A specific calculation process is as follows. Assuming that coordinates of the LiDAR device are $(x_{Lidar}, y_{Lidar}, z_{Lidar})$ and geometric coordinates of the current node are (x, y, z), first, a vertical tangent value $\tan \theta$ of the current node relative to the LiDAR device is calculated by using the following formula:

$$\tan \theta = \frac{z - z_{Lidar}}{\sqrt{(x - x_{Lidar})^2 + (y - y_{Lidar})^2}} \tag{3}$$

Further, because each laser has a deflection angle relative to the LiDAR device, a relative tangent value $\tan \theta_{corr,L}$ of the current node relative to the laser is calculated by using the following formula:

$$\tan \theta_{corr,L} = \frac{z - z_{Lidar} - z_L}{\sqrt{(x - x_{Lidar})^2 + (y - y_{Lidar})^2}} = \tan \theta - \frac{z_L}{r} \tag{4}$$

Finally, the relative tangent value $\tan \theta_{corr,L}$ of the current node is used to predict the planar position of the current node. Specifically, it is assumed that a tangent value of a lower boundary of the current node is $\tan(\theta_{bottom})$, and a tangent value of an upper boundary of the current node is $\tan(\theta_{top})$. The planar position is quantized into four quantization intervals according to $\tan \theta_{corr,L}$, that is, context information of the planar position is determined.

However, the octree geometry encoding mode has an efficient compression rate only for points that are correlated in space. For a point that is in an isolated position in a geometric space, complexity may be greatly reduced by using a direct coding mode (Direct Coding Model, DCM). For all nodes in an octree, usage of the DCM is not represented by flag information, but is inferred by using information about a parent node and a neighbor of a current node. Whether the current node is eligible for DCM coding is determined in the following three manners.

(1) The current node has no sibling nodes, that is, the parent node of the current node has only one child node, and a parent node of the parent node of the current node has only two occupied child nodes, that is, the current node has a maximum of one neighboring node.

(2) The parent node of the current node has only one occupied child node, that is, the current node, and six neighboring nodes that are coplanar with the current node are all empty nodes.

(3) A quantity of sibling nodes of the current node is greater than 1.

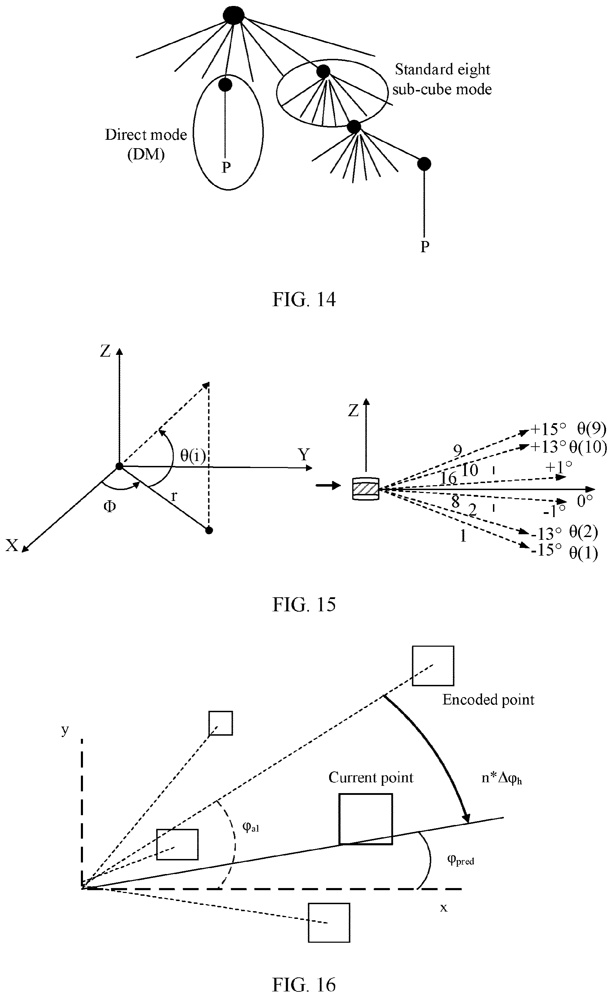

Exemplarily, FIG. 14 is a schematic diagram of coding in an infer direct mode coding (IDCM). As shown in FIG. 14, if a current node is not eligible for DCM coding, octree partitioning is performed on the current node. If the current node is eligible for DCM coding, a quantity of points included in the node is further determined. If the quantity of points is less than a threshold (for example, 2), DCM coding is performed on the node. Otherwise, octree partitioning is continued. When the DCM coding mode is applied, first, it needs to be encoded whether the current node is a real isolated point, that is, IDCM_flag. If IDCM_flag is true, DCM coding is used for the current node. Otherwise, octree coding is still used. When the current node meets a DCM coding condition, a DCM coding mode needs to be encoded for the current node. Currently, there are two DCM modes: (a) there is only one point (or a plurality of points that are duplicate points); (b) there are two points. Finally, geometric information of each point needs to be encoded. Assuming that a side length of the node is $2^d$, d bits are required for encoding each component of geometric coordinates of the node, and the bit information is directly encoded into a bitstream. It should be noted herein that, when a LiDAR point cloud is encoded, predictive encoding is performed on coordinate information in three dimensions by using a LiDAR collection parameter, thereby further improving encoding efficiency of geometric information.

The following describes a process of IDCM encoding in detail.

When a current node meets a requirement of the direct coding mode (DCM), first, a quantity numPoints of points in the current node is encoded according to different values of DirectMode.

If the current node does not meet the requirement of the DCM, the encoding is not performed (that is, the quantity of the points is greater than 2 and the points are not duplicate points).

If the quantity numPonts of the points included in the current node is less than or equal to 2, the encoding process is as follows.

> 1) First, whether numPonts of the current node is greater than 1 is encoded.
> 2) If the current node has only one point and a geometric encoding environment is geometric lossless encoding, that the second point of the current node is not a duplicate point needs to be encoded.

If the quantity numPonts of the points included in the current node is greater than 2, the encoding process is as follows.

> 1) First, that numPonts of the current node is less than or equal to 1 is encoded.
> 2) Then, that the second point of the current node is a duplicate point is encoded. Then, whether a quantity of duplicate points in the current node is greater than 1 is encoded. If the quantity of the duplicate points is greater than 1, exponential-Golomb decoding needs to be performed on a quantity of remaining duplicate points.

After the quantity of the points in the current node is encoded, coordinate information of the points included in the current node is encoded, which is described separately for a LiDAR point cloud and a human eye point cloud.

For a human eye point cloud:

> 1) If a current node includes only one point, bypass encoding (Bypass coding) is performed on geometric information of the point in three dimensions.
> 2) If the current node includes two points, first, a preferentially encoded coordinate axis directAxis is obtained by using geometric coordinates of the points. It should be noted herein that, currently compared coordinate axes include only an x-axis and a y-axis, and do not include a z-axis. Assuming that geometric coordinates of the current node are nodePos, a manner of determining is as follows:

$$\text{directAxis} = !\,(\text{nodePos}[0] < \text{nodePos}[1])$$

That is, an axis with a small geometric coordinate position of the node is used as the preferentially encoded coordinate axis dirextAxis. Then, geometric information of the preferentially encoded coordinate axis dirextAxis is first encoded in the following manner. It is assumed that a to-be-encoded geometry bit depth corresponding to the preferentially encoded axis is nodeSizeLog2, and coordinates of the two points are respectively pointPos[0] and pointPos[1].

```
Bool sameBit=true;
while(nodeSizeLog2&& sameBit){
    int mask=1<< nodeSizeLog2;
    --nodeSizeLog2;
    bool bit0=!!( pointPos[0]& mask)
    bool bit1=!!( pointPos[1]& mask)
    sameBits=bit0==bit1;
    entropyCodeSameBit(sameBits); ///<entropy coding
    if(sameBits)
        encodePosBit(bit0);///<Bypass coding
}
```

After the preferentially encoded axis dirextAxis is encoded, bypass encoding is performed on geometric coordinates of a current point. Assuming that a remaining encoding bit depth of each point is nodeSizeLog2, a specific encoding process is as follows:

```
for(int axisIdx=0;axisIdx<3;++axisIdx)
    for(int mask=(1<< nodeSizeLog2[axisIdx])>>1;mask;mask>>1)
        encodePosBit(!!(pointPos[axisIdx]&mask));
```

For a LiDAR point cloud:

1) If a current node includes two points, first, a preferentially encoded coordinate axis dirextAxis is obtained by using geometric coordinates of the points. Assuming that geometric coordinates of the current node are nodePos, a manner of determining is as follows:

$$dirextAxis = !\,(nodePos[0] < nodePos[1])$$

That is, an axis with a small geometric coordinate position of the node is used as the preferentially encoded coordinate axis dirextAxis. It should be noted herein that, currently compared coordinate axes include only an x-axis and a y-axis, and do not include a z-axis. Then, geometric information of the preferentially encoded coordinate axis dirextAxis is first encoded in the following manner. It is assumed that a to-be-encoded geometry bit depth corresponding to the preferentially encoded axis is nodeSizeLog2, and coordinates of the two points are respectively pointPos[0] and pointPos[1].

```
Bool sameBit=true;
while(nodeSizeLog2&& sameBit){
    int mask=1<< nodeSizeLog2;
    --nodeSizeLog2;
    bool bit0=!!( pointPos[0]& mask)
    bool bit1=!!( pointPos[1]& mask)
    sameBits=bit0==bit1;
    entropyCodeSameBit(sameBits);
    if(sameBits)
        encodePosBit(bit0);
}
```

After the preferentially encoded axis dirextAxis is encoded, geometric coordinates of a current point are encoded.

Since a collection parameter of a LiDAR point cloud can be obtained, geometric coordinate information of the current node can be predicted by using the collection parameter, thereby further improving encoding efficiency of geometric information of the point cloud. Similarly, first, a principal axis for bypass encoding is obtained by using the geometric information nodePos of the current node. Then, encoded geometric information of a direction is used to perform predictive encoding on geometric information of another direction. Similarly, assuming that an axis for bypass encoding is directAxis and a to-be-encoded bit depth in the bypass encoding is nodeSizeLog2, an encoding manner is as follows:

```
for(int mask=(1<< nodeSizeLog2)>>1;mask;mask>>1)
    encodePosBit(!!(pointPos[directAxis]&mask));
```

It should be noted herein that, all geometric precision information in the direction directAxis is encoded herein.

FIG. 15 is a schematic diagram of coordinate transform of a point cloud acquired by a rotating LiDAR device. After all precision values in a coordinate direction directAxis are encoded, first, LaserIdx corresponding to a current point is calculated, as shown by pointLaserIdx in FIG. 15, and LaserIdx of a current node, that is, nodeLaserIdx, is calculated. Then, LaserIdx of the node, that is, nodeLaserIdx, is used to perform predictive encoding on LaserIdx of the point, that is, pointLaserIdx. LaserIdx of the node or the point is calculated in the following manner. Assuming that geometric coordinates of the point are pointPos, start coordinates of a laser ray are LidarOrigin, a quantity of lasers is LaserNum, a tangent value of each laser is $\tan\theta_i$, and a deflection position of each laser in a vertical direction is $Z_i$:

```
Int bestLaserIdx=0;

Int Distoration=INT_MAX;

For(int LaserIdx=0; LaserIdx<numLaser;++ LaserIdx){
```

$$\text{Int radius} = \sqrt{(\text{pointPos}[0] - \text{LidarOrigin}[0])2 + (\text{pointPos}[1] - \text{LidarOrigin}[1])2}$$

```
int invRadius=1/ radius
```

int Z=pointPos[2]+ $Z_i$

int tanTheta= Z×invRadius

if(std::abs(tanTheta-tan$\theta_i$)< Distoration){

Distoration= std::abs(tanTheta-tan$\theta_i$);

bestLaserIdx= LaserIdx;

```
        }

    }
```

After LaserIdx of the current point is obtained through calculation, first, predictive encoding is performed on pointLaserIdx of the point by using LaserIdx of the current node. After LaserIdx of the current point is encoded, predictive encoding is performed on geometric information of the current point in three dimensions by using a collection parameter of the LiDAR device.

When predictive encoding is performed, FIG. 16 is a schematic diagram of predictive encoding. As shown in FIG. 16, first, a predicted value, that is, $\varphi_{pred}$, of a corresponding horizontal azimuth is obtained by using LaserIdx corresponding to a current point, and then a horizontal azimuth $\varphi_{node}$ corresponding to a node corresponding to the current point is obtained by using geometric information of the node. A manner of calculating a horizontal azimuth $\varphi$ by using the geometric information of the node is as follows. Assuming that geometric coordinates of the node are nodePos:

$$\varphi = \arctan (\text{nodePos}[1]/\text{nodePos}[x]) \tag{5}$$

A collection parameter of a LiDAR device may be used to obtain a quantity numPoints of rotation points of each laser, that is, a quantity of points obtained by each laser ray rotating by one full circle. In this case, the quantity of the rotation points of each laser may be used to obtain a rotational angular velocity deltaPhi of each laser through calculation, that is:

$$\text{deltaPhi} = \frac{2\pi}{numPoints} \tag{6}$$

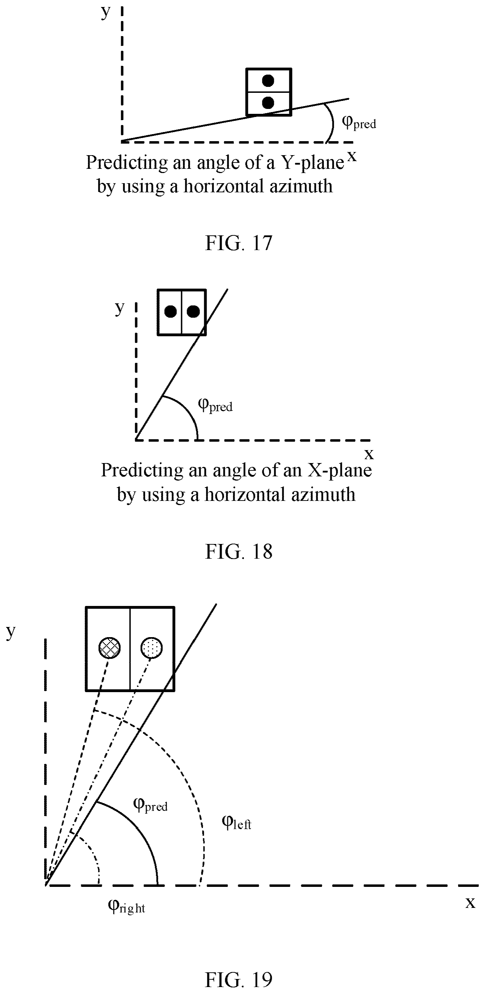

Then, a predicted value $\varphi_{predPoint}$ of the horizontal azimuth corresponding to the current point is obtained through calculation by using the horizontal azimuth $\varphi_{pred}$ of the node and a horizontal azimuth $\varphi_{pred}$ of a previous encoded point of a laser corresponding to the current point. FIG. 17 is a schematic diagram 1 of predicting an angle by using a horizontal azimuth, and FIG. 18 is a schematic diagram 2 of predicting an angle by using a horizontal azimuth. As shown in FIG. 17 and FIG. 18, an angle of an X-plane or a Y-plane may be predicted by using a horizontal azimuth. A calculation manner is as follows:

$$\varphi_{predPoint} = \frac{\varphi pred - \varphi node}{\text{deltaPhi}} \times \text{deltaPhi} + \varphi pred \tag{7}$$

FIG. 19 is a schematic diagram of predictive encoding on an X-axis or a Y-axis. As shown in FIG. 19, finally, predictive encoding is performed on geometric information of a current node by using a predicted value $\varphi_{preaPoint}$ of a horizontal azimuth, a horizontal azimuth $\varphi_{left}$ of a low plane of the current node, and a horizontal azimuth $\varphi_{right}$ of a high plane of the current node.

Details are as follows:

$$int\ angLeI = \varphi_{left} - \varphi_{pred}$$

$$int\ angLeR = \varphi_{right} - \varphi_{pred}$$

$$int\ context = (angLeI \geq 0\&\&angLeR \geq 0)||(angLeI < 0\&\&angLeR < 0)?\ 0:\ 2$$

$$int\ minAngle = std :: min\Big(abs(angLeI),\ abs(angLeR)\Big)$$

$$int\ maxAngle = std :: max\Big(abs(angLeI),\ abs(angLeR)\Big)$$

$$context += maxAngle > minAngle?\ 0:\ 1$$

$$context += maxAngle > minAngle?\ 0:\ 4$$

After LaserIdx of a point is encoded, predictive encoding is performed on a Z-axis direction of the current point by using LaserIdx corresponding to the current point. That is, currently, depth information radius of a cylindrical coordinate system is obtained through calculation by using x and y information of the current point. Then, a tangent value of the current point and an offset in a vertical direction are obtained by using LaserIdx of the current point. In this case, a predicted value, that is, Z_pred, of the current point in the Z-axis direction may be obtained:

$$int\ radius$$

$$= \sqrt{(pointPos[0] - LidarOrigin[0])2 +\ (pointPos[1] - LidarOrigin[1])\ 2}$$

$$int\ tanTheta = tan\theta_{laserIdx}$$

$$int\ zOffset = Z_{laserIdx}$$

$$Z\_pred = radius \times tanTheta - zOffset$$

Finally, Z_pred is used to perform predictive encoding on geometric information of the current point in the Z-axis direction, to obtain a prediction residual Z_res, and then Z_res is encoded.

It should also be noted that, when a node is divided into leaf nodes, in a case of lossless geometry encoding, a quantity of duplicate points in the leaf nodes needs to be encoded. Finally, occupancy information of all nodes is encoded to generate a binary bitstream. In addition, currently a plane coding mode is introduced into G-PCC. In a process of geometric partitioning, it is determined whether child nodes of a current node are on a same plane. If the child nodes of the current node meet a condition of being on the same plane, the plane is used to represent the child nodes of the current node.

For octree geometry decoding, in a breadth-first traversal sequence, before decoding occupancy information of each node, the decoding end first determines, by using reconstructed geometric information, whether to perform planar decoding or IDCM decoding on a current node. If the current node meets a condition of planar decoding, the decoding end first decodes planar mode information and planar position information of the current node, and then decodes, based on planar information, occupancy information of the current node. If the current node meets a condition of IDCM decoding, the decoding end first decodes whether the current node is a real IDCM node. If the current node is a real IDCM node, the decoding end parses a DCM decoding mode of the current node, and then may obtain a quantity of points in the current DCM node. Finally, the decoding end decodes geometric information of each point. For a node that meets neither plane decoding nor DCM decoding, occupancy information of the current node is decoded. In this manner, an occupancy code of each node is obtained through continuous parsing, and nodes are successively divided until 1x1x1 unit cubes are obtained. A quantity of points included in each leaf node is obtained through parsing, and finally, reconstructed geometric information of a point cloud is restored.

The following describes a process of IDCM decoding in detail.

The decoding processing is the same as the encoding. First, priori information is used to determine whether an IDCM is enabled for a node. That is, a condition for enabling the IDCM is as follows.

(1) The current node has no sibling nodes, that is, the parent node of the current node has only one child node, and a parent node of the parent node of the current node has only two occupied child nodes, that is, the current node has a maximum of one neighboring node.

(2) The parent node of the current node has only one occupied child node, that is, the current node, and six neighboring nodes that are coplanar with the current node are all empty nodes.

(3) A quantity of sibling nodes of the current node is greater than 1.

When the node meets a condition of DCM coding, first, whether the current node is a real DCM node, that is, IDCM_flag, is decoded. If IDCM_flag is true, DCM coding is used for the current node. Otherwise, octree coding is still used.

Then, a quantity numPoints of points in the current node is decoded. A specific decoding manner is as follows.

1) First, whether numPonts of the current node is greater than 1 is decoded.

2) If it is obtained through the decoding that numPonts of the current node is greater than 1, whether the second point is a duplicate point is decoded. If the second point is not a duplicate point, it may be implicitly inferred herein that the second type of the DCM mode is met, that is, the current node includes only two points.

3) If it is obtained through the decoding that numPonts of the current node is less than or equal to 1, whether the second point is a duplicate point is decoded. If the second point is not a duplicate point, it may be implicitly inferred herein that the second type of the DCM mode is met, that is, the current node includes only one point. If it is obtained through the decoding that the second point is a duplicate point, it may be inferred that the third type of the DCM mode is met, that is, the current node includes a plurality of points but the points are all duplicate points. In this case, whether a quantity of the duplicate points is greater than 1 is decoded (entropy decoding). If the quantity is greater than 1, a quantity of remaining duplicate points is decoded (exponential-Golomb decoding).

If the current node does not meet a requirement of a DCM node, the decoding is not performed (that is, the quantity of the points is greater than 2 and the points are not duplicate points).

After the quantity of the points in the current node is decoded, coordinate information of the points included in the current node is decoded, which is described separately for a LiDAR point cloud and a human eye point cloud.

For a human eye point cloud:

1) If a current node includes only one point, bypass decoding (Bypass coding) is performed on geometric information of the point in three dimensions.

2) If the current node includes two points, first, a preferentially decoded coordinate axis dirextAxis is obtained by using geometric coordinates of the points. It should be noted herein that, currently compared coordinate axes include only an x-axis and a y-axis, and do not include a z-axis. Assuming that geometric coordinates of the current node are nodePos, a manner of determining is as follows:

$$\text{dirextAxis} = !\,(\text{nodePos}[0] < \text{nodePos}[1])$$

That is, an axis with a small geometric coordinate position of the node is used as the preferentially decoded coordinate axis dirextAxis. Then, geometric information of the preferentially decoded coordinate axis dirextAxis is first decoded in the following manner. It is assumed that a to-be-decoded geometry bit depth corresponding to the preferentially decoded axis is nodeSizeLog2, and coordinates of the two points are respectively pointPos[0] and pointPos[1].

```
Bool sameBit=true;
while(nodeSizeLog2&& sameBit){
        pointPos[0][dirextAxis]<<1;
        pointPos[1][dirextAxis]<<1;
        --nodeSizeLog2;
        int bit=0;
        deEntropyCodeSameBit(sameBits); ///<entropy coding
        if(sameBits){
                bit =decodePosBit();///<Bypass coding
                pointPos[0][dirextAxis]|= bit
                pointPos[1][dirextAxis]|= bit
        }else
                pointPos[1][dirextAxis]|= 1///<This is because the two points are sorted
in a direction of a preferentially encoded axis during encoding. Therefore, it
is ensured that pointPos[0][dirextAxis] < pointPos[1][dirextAxis].
Therefore, in decoding, if bits for the two points are different, it may be
inferred that a bit for the first point is 0 and a bit for the second point is 1.
        }
```

After the preferentially decoded axis dirextAxis is decoded, bypass decoding is performed on the geometric coordinates of the current point. Assuming that a remaining encoding bit depth of each point is nodeSizeLog2, a specific decoding process is as follows. Assuming that coordinate information of the point is pointPos:

```
for(int axisIdx=0;axisIdx<3;++axisIdx)
        for(int idx= nodeSizeLog2[axisIdx]; idx; idx--){
                pointPos[axisIdx]<<1;
                pointPos[axisIdx]|=decodePosBit();
        }
```

For a LiDAR point cloud:

1) If a current node includes two points, first, a preferentially decoded coordinate axis dirextAxis is obtained by using geometric coordinates of the points. Assuming that geometric coordinates of the current node are nodePos, a manner of determining is as follows:

$$dirextAxis = !(nodePos[0] < nodePos[1])$$

That is, an axis with a small geometric coordinate position of the node is used as the preferentially decoded coordinate axis dirextAxis. It should be noted herein that, currently compared coordinate axes include only an x-axis and a y-axis, and do not include a z-axis. Then, geometric information of the preferentially encoded coordinate axis dirextAxis is first decoded in the following manner. It is assumed that a to-be-encoded geometry bit depth corresponding to the preferentially decoded axis is nodeSizeLog2, and coordinates of the two points are respectively pointPos[0] and pointPos[1].

```
Bool sameBit=true;
while(nodeSizeLog2&& sameBit){
        pointPos[0][dirextAxis]<<1;
        pointPos[1][dirextAxis]<<1;
        --nodeSizeLog2;
        int bit=0;
        deEntropyCodeSameBit(sameBits); ///<entropy coding
        if(sameBits){
            bit =decodePosBit();///<Bypass coding
            pointPos[0][dirextAxis]|= bit
            pointPos[1][dirextAxis]|= bit
        }else
            pointPos[1][dirextAxis]|= 1///<This is because the two points are sorted
in a direction of a preferentially encoded axis during encoding. Therefore, it
is ensured that pointPos[0][dirextAxis] < pointPos[1][dirextAxis].
Therefore, in decoding, if bits for the two points are different, it can be
inferred that a bit for the first point is 0 and a bit for the second point is 1.
    }
```

After the preferentially decoded axis dirextAxis is decoded, the geometric coordinates of the current point are decoded.

Similarly, first, a principal axis for bypass decoding is obtained by using the geometric information nodePos of the current node. Then, decoded geometric information of a direction is used to decode geometric information of another direction. Similarly, assuming that the axis for bypass decoding is directAxis and a to-be-decoded bit depth in the bypass decoding is nodeSizeLog2, a decoding manner is as follows:

```
for(int idx= nodeSizeLog2[directAxis]; idx; idx--) {
        pointPos[directAxis]<<1;
        pointPos[directAxis]|=decodePosBit();
    }
```

It should be noted herein that, all geometric precision information in the direction directAxis is decoded herein.

After all precision values in a coordinate direction directAxis are decoded, first, LaserIdx of a current node, that is, nodeLaserIdx, is calculated. Then, LaserIdx of the node, that is, nodeLaserIdx, is used to perform predictive decoding on LaserIdx of a point, that is, pointLaserIdx. LaserIdx of the node or the point is calculated in the same manner as the encoding end. Finally, prediction residual information of LaserIdx of the current point and prediction residual information of LaserIdx of the node are decoded, to obtain ResLaserIdx.

$$\text{PointLaserIdx} = \text{nodeLaserIdx} + \text{ResLaserIdx} \qquad (8)$$

After LaserIdx of the current point is decoded, predictive decoding is performed on geometric information of the current point in three dimensions by using a collection parameter of a LiDAR device.

When predictive decoding is performed, as shown in FIG. 16, first, a predicted value, that is, $\varphi_{pred}$, of a corresponding horizontal azimuth is obtained by using LaserIdx corresponding to a current point, and then a horizontal azimuth $\varphi_{node}$ corresponding to a node corresponding to the current point is obtained by using geometric information of the node. A manner of calculating a horizontal azimuth $\varphi$ by using the geometric information of the node is as follows.

Assuming that geometric coordinates of the node are nodePos, the horizontal azimuth $\varphi$ is calculated according to the formula (5).

The collection parameter of the LiDAR device may be used to obtain a quantity numPoints of rotation points of each laser, that is, a quantity of points obtained by each laser ray rotating by one full circle. In this case, the quantity of the rotation points of each laser may be used to obtain a rotational angular velocity deltaPhi of each laser through calculation, that is the formula (6).

Then, a predicted value $\varphi_{predPoint}$ of the horizontal azimuth corresponding to the current point is obtained through calculation by using the horizontal azimuth $\varphi_{node}$ of the node and a horizontal azimuth $\varphi_{pred}$ of a previous encoded point of a laser corresponding to the current point. As shown in FIG. 17 and FIG. 18, an angle of an X-plane or a Y-plane may be predicted by using a horizontal azimuth. A calculation manner is shown in the formula (7).

As shown in FIG. 19, finally, predictive encoding is performed on geometric information of a current node by using a predicted value $\varphi_{predPoint}$ of a horizontal azimuth, a horizontal azimuth $\varphi_{left}$ of a low plane of the current node, and a horizontal azimuth $\varphi_{right}$ of a high plane of the current node.

Details are as follows:

$$\text{int angLel} = \varphi_{left} - \varphi_{pred}$$

$$\text{int angLeR} = \varphi_{right} - \varphi_{pred}$$

$$\text{int context} = (\text{angLel} \geq 0 \&\& \text{angLeR} \geq 0) || (\text{angLel} < 0 \&\& \text{angLeR} < 0)? 0 : 2$$

$$\text{int minAngle} = \text{std} :: \min\Big(abs(\text{angLel}), \ abs(\text{angLeR})\Big)$$

$$\text{int maxAngle} = \text{std} :: \max\Big(abs(\text{angLel}), \ abs(\text{angLeR})\Big)$$

$$\text{context} += \text{maxAngle} > \text{minAngle}? 0 : 1$$

$$\text{context} += \text{maxAngle} > \text{minAngle}? 0 : 4$$

After LaserIdx of a point is decoded, predictive decoding is performed on a Z-axis direction of the current point by using LaserIdx corresponding to the current point. That is, currently, depth information radius of a cylindrical coordinate system is obtained through calculation by using x and y information of the current point. Then, a tangent value of the current point and an offset in a vertical direction are obtained by using LaserIdx of the current point. In this case, a predicted value, that is, Z_pred, of the current point in the Z-axis direction may be obtained:

$$\text{int radius} = \sqrt{(\text{pointPos}[0] - \text{LidarOrigin}[0])2 + (\text{pointPos}[1] - \text{LidarOrigin}[1])2}$$

$$\text{int tanTheta} = \tan\theta_{laserIdx}$$

$$\text{int zOffset}= Z_{\text{laserIdx}}$$

$$\text{Z\_pred}= \text{radius} \times \text{tanTheta}- \text{zOffset}$$

Finally, Z_res and Z_pred obtained through the decoding are used to reconstruct and restore geometric information of the current point in the Z-axis direction.

For geometric information coding based on a triangle soup (triangle soup, trisoup), geometric partitioning needs to be performed first in a geometric information coding framework based on a trisoup. However, different from that in geometric information coding based on a binary tree, a quadtree, or an octree, in this method, a point cloud does not need to be divided into unit cubes with side lengths of $1 \times 1 \times 1$, but is divided until a block (block) with a side length of W is obtained. Based on a surface formed by point clouds in each block, a maximum of twelve vertices (vertex) generated by the surface and twelve edges of the block are obtained. Vertex coordinates of each block are successively encoded to generate a binary bitstream.

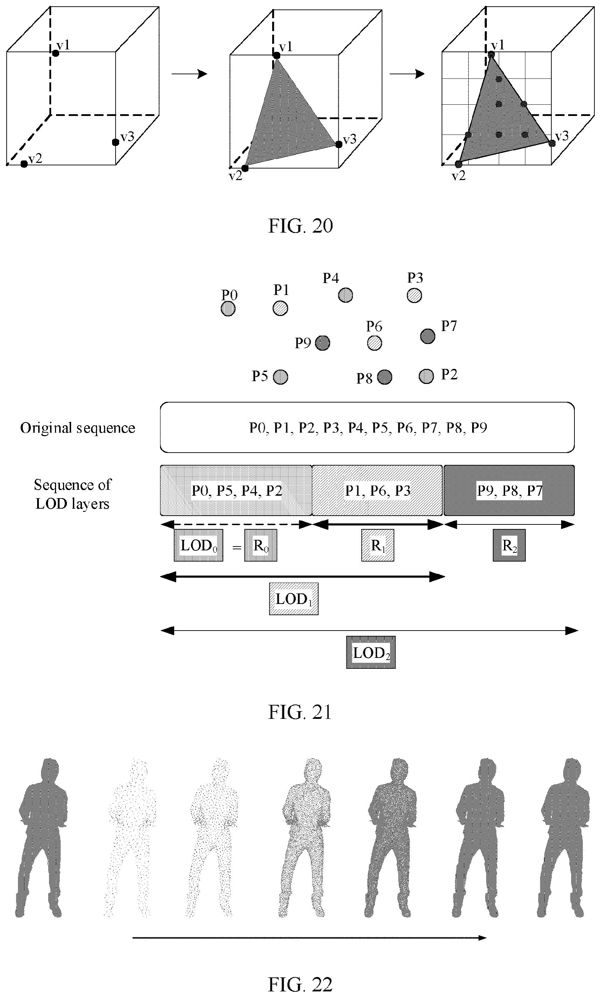

When reconstructing geometric information of a trisoup-based point cloud, a decoding end first decodes vertex coordinates, to reconstruct a triangular patch. This process is shown in FIG. 20. There are three vertices (v1, v2, and v3) in the block. A triangle soup formed by the three vertices in a specific order is referred to as a triangle soup, that is, trisoup. Then, sampling is performed on the triangle soup, and obtained sampling points are used as a reconstructed point cloud in the block.

Predictive geometry coding (Predictive geometry coding, PredGeomTree) includes: sorting points of an input point cloud in sequence first, where sorting methods currently used include disordering, Morton ordering, azimuth ordering, and radial distance ordering. At an encoding end, a prediction tree structure is established in two different modes, including KD-tree (a high-latency slow mode) and a low-latency fast mode (by using LiDAR calibration information). When the LiDAR calibration information is used, points are assigned to different lasers (Laser), and a prediction tree structure is established according to the different lasers. Next, based on the prediction tree structure, each node in the prediction tree is traversed, geometric position information of the nodes is predicted by selecting different prediction modes, to obtain prediction residuals, and the geometric prediction residuals are quantized by using a quantization parameter. Finally, with continuous iterations, the prediction residuals of position information of the prediction tree nodes, the prediction tree structure, the quantization parameter, and the like are encoded to generate a binary bitstream.

For predictive geometry decoding, a decoding end continuously parses the bitstream to reconstruct a prediction tree structure, obtains prediction residual information of a geometric position of each prediction node and a quantization parameter through the parsing, and dequantizes the prediction residual to obtain reconstructed geometric position information of each node and finally complete geometric reconstruction.

After geometry encoding is completed, geometric information needs to be reconstructed. Currently, attribute encoding is mainly performed on color information. First, the color information is converted from an RGB color space to a YUV color space. Then, the point cloud is colored again by using the reconstructed geometric information, so that attribute information that is not encoded corresponds to the reconstructed geometric information. During encoding of the color information, there are mainly two transform methods. One method is distance-based lifting transform that depends on LOD partitioning, and the other method is to directly perform RAHT transform. In both methods, the color information is transformed from a spatial domain to a frequency domain, to obtain a high frequency coefficient and a low frequency coefficient. Finally, the coefficients are quantized and encoded, to generate a binary bitstream. For details, refer to FIG. 4A and FIG. 4B.

Further, when the attribute information is predicted by using the geometric information, a Morton code is used to perform nearest neighbor search. A Morton code corresponding to each point in the point cloud may be obtained by using geometric coordinates of the point. The following describes a specific method for calculating the Morton code. For three-dimensional coordinates in which each component is represented by a binary number with d bits, the three components may be represented as:

$$\text{x} = \sum_{\ell=1}^{d} 2^{d-\ell}\, \text{x}_{\ell}, \ \ \text{y} = \sum_{\ell=1}^{d} 2^{d-\ell}\, \text{y}_{\ell}, \ \ \text{z} = \sum_{\ell=1}^{d} 2^{d-\ell}\, \text{z}_{\ell} \qquad (9)$$

Herein, $x_{\ell}, y_{\ell}, z_{\ell} \in \{0, 1\}$ are respectively binary values corresponding to a most significant bit ($\ell = 1$) to a least significant bit ($\ell = d$) of $x, y$, and $z$. The Morton code $M$ is obtained by arranging, for $x, y$, and $z$, $x_{\ell}, y_{\ell}, z_{\ell}$ in a sequence from the most significant bit to the least significant bit. A calculation formula of M is as follows:

$$\text{M} = \sum_{\ell=1}^{d} 2^{3(d-\ell)} \left(4\text{x}_{\ell} + 2\text{y}_{\ell} + \text{z}_{\ell}\right) = \sum_{\ell'=1}^{3d} 2^{3d-\ell'}\, \text{m}_{\ell'} \qquad (10)$$

Herein, $m_{\ell'} \in \{0, 1\}$ represents values from the most significant bit ($\ell' = 1$) to the least significant bit ($\ell' = 3d$) of M. After the Morton code M of each point in the point cloud is obtained, the points in the point cloud are arranged in ascending order of Morton codes, and a weight value w of each point is set to 1.

It may be further understood that, for a G-PCC encoding and decoding framework, common test conditions are as follows.

(1) There are four test conditions.

Condition 1: A geometric position is limited lossy and an attribute is lossy.
Condition 2: A geometric position is lossless and an attribute is lossy.
Condition 3: A geometric position is lossless and an attribute is limited lossy.
Condition 4: A geometric position is lossless and an attribute is lossless.

(2) A common test sequence includes four types: Cat1A, Cat1B, Cat3-fused, and Cat3-frame. A Cat2-frame point cloud includes only reflectance attribute information, a Cat1A or Cat1B point cloud includes only color attribute information, and a Cat3-fused point cloud includes both color attribute information and reflectance attribute information.

(3) There are two types of technical roadmaps, which are distinguished by algorithms used for geometric compression.

Technical roadmap 1: octree geometry encoding branch

At an encoding end, a bounding box is divided into sub-cubes, and sub-cubes (including points in a point cloud) that are not empty are further divided until leaf nodes obtained by the partitioning are $1 \times 1 \times 1$ unit cubes. In a case of lossless geometry encoding, a quantity of points included in each leaf node needs to be encoded, to finally complete octree geometry encoding and generate a binary bitstream.

At a decoding end, parsing is continuously performed in a breadth-first traversal sequence, to obtain an occupancy code of each node, and the nodes are sequentially divided until unit cubes of $1 \times 1 \times 1$ are obtained. In a case of lossless geometry decoding, parsing needs to be performed to obtain a quantity of points included in each leaf node, to finally obtain reconstructed geometric information of a point cloud through restoration.

Technical roadmap 2: predictive geometry coding branch

At an encoding end, a prediction tree structure is established in two different modes: KD-tree (a high-latency slow mode) and LiDAR calibration information (a low-latency fast mode). By using the LiDAR calibration information, the points are assigned to different lasers, and a prediction tree structure is established according to the different lasers. Next, based on the prediction tree structure, each node in the prediction tree is traversed, geometric position information of the nodes is predicted by selecting different prediction modes, to obtain prediction residuals, and the geometric prediction residuals are quantized by using a quantization parameter. Finally, with continuous iterations, the prediction residuals of position information of the prediction tree nodes, the prediction tree structure, the quantization parameter, and the like are encoded to generate a binary bitstream.

At a decoding end, bitstreams are continuously parsed to reconstruct a prediction tree structure, prediction residual information of a geometric position of each prediction node and a quantization parameter are obtained through the parsing, and the prediction residual is dequantized to obtain reconstructed geometric position information of each node and finally complete geometric reconstruction.

For attribute information encoding, currently, a G-PCC encoding framework includes three attribute encoding methods: predicting transform (Predicting Transform, PT), lifting transform (Lifting Transform, LT), and region adaptive hierarchical transform (Region Adaptive Hierarchical Transform, RAHT). In PT and LT, predictive encoding is performed on a point cloud based on a sequence of generating LODs, while in RAHT, adaptive transform is performed on attribute information from bottom to top according to a construction hierarchy of an octree. The following separately describes the three methods for encoding a point cloud attribute.

For predictive encoding of point cloud attribute information, currently, an attribute prediction module of G-PCC uses an attribute predictive encoding scheme based on nearest neighbors in an LOD structure. An LOD construction method includes an LOD construction solution based on a distance, an LOD construction solution based on a fixed sampling rate, an LOD construction solution based on an octree, and the like. In the LOD construction solution based on a distance threshold, before an LOD is constructed, Morton sorting is first performed on a point cloud, to ensure relatively strong attribute correlation between neighboring points. FIG. 21 shows an example of an LOD construction process based on a distance. A point cloud is divided into L different levels of detail (RI) 1 = 0, 1, ..., L-1 according to L preset Manhattan (Manhattan) distances (dl) 1 = 0, 1, ..., L-1, where (dl) 1 = 0, 1, ..., L-1 meets dl < dl-1. The LOD construction process is as follows. (1) First, all points in the point cloud are marked as unaccessed, and a set V is established to store a set of points that have been accessed. (2) For each time of iteration 1, the points in the point cloud are traversed. If a current point has been accessed, the point is ignored. Otherwise, a minimum distance D from the current point to the point set V is calculated. If D < dl, the point is ignored. Otherwise, the current point is marked as accessed and added to a refinement layer R1 and the point set V. (3) Points at a level of detail LODl are formed by points at refinement layers R0, R1, R2, ..., Rl. (4) The foregoing steps are repeated until all the points are marked as accessed.

Based on an LOD structure, linear weighted prediction is performed on an attribute value of each point by using a reconstructed attribute value of a point at a same LOD layer or a higher LOD layer, where a maximum quantity of reference prediction neighbors is determined by a higher-level syntax element of an encoder. For an attribute of each point, at an encoding end, attributes of N nearest neighboring points obtained through search are selected by using a rate-distortion optimal algorithm for weighted prediction, or an attribute of a single nearest neighboring point is selected for prediction. Finally, a selected prediction mode and a prediction residual are encoded.

$$\text{Attr}_i' = Round(\frac{1}{N}\sum_{m \in p_i} \frac{\frac{1}{D_m^2}}{\sum_{m \in p_i}\frac{1}{D_m^2}} Attr_m) \qquad (11)$$

Herein, N represents a quantity of predicted points in a set of nearest neighboring points of a point i, Pi represents a sum of N nearest neighboring points of the point i, Dm represents a spatial geometric distance from a nearest neighboring point m to the current point i, Attrm represent a reconstructed attribute value of the nearest neighboring point m, Attr$_i$' represents an attribute prediction value of the current point i, and the quantity N of the points is a preset value.

To balance attribute encoding efficiency with parallel processing between different LOD layers, a switch is introduced into the higher-level syntax element of the encoder, to control whether to introduce intra-LOD prediction. If the switch is turned on, intra-LOD prediction is enabled, and prediction may be performed by using points at a same LOD layer. It should be noted that, intra-LOD prediction is always used when a quantity of LOD layers is 1.

FIG. 22 shows a visualized result of LOD. As shown in FIG. 22, points at the first layer represent an outer contour of a point cloud. As a quantity of levels of detail increases, detail descriptions of the point cloud become gradually clear.

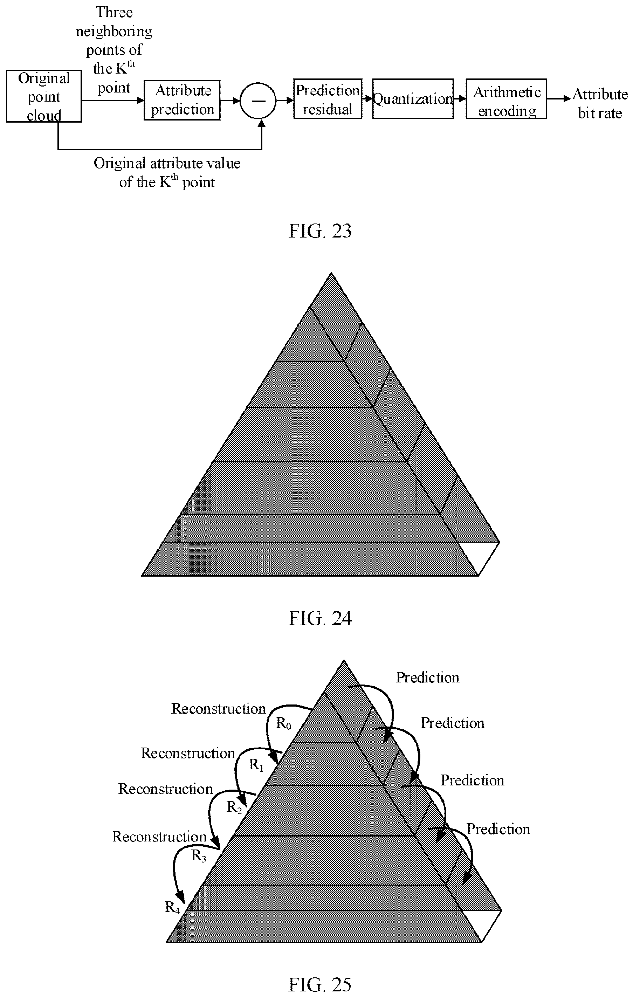

FIG. 23 is a flowchart of G-PCC attribute prediction. In a process of selecting an optimal predicted value, after LOD construction is completed, three nearest neighboring points of a current to-be-encoded point are first found from encoded data points according to a sequence of generating LODs. Reconstructed attribute values of the three nearest neighboring points are used as candidate predicted values of the current to-be-encoded point. Then, an optimal predicted value is selected from the candidate predicted values according to rate-distortion optimal (Rate-Distortion Optimal, RDO). For example, when an attribute value of a point P2 in FIG. 18 is encoded, a prediction variable index of an attribute value of a nearest neighboring point P4 is set to 1, prediction variable indexes of attribute values of a second nearest neighboring point P5 and a third nearest neighboring point P0 are set to 2 and 3, respectively, and prediction variable indexes of weighted average values of the points P0, P5, and P4 are set to 0, as shown in Table 1.

Table 1

| Prediction mode | Predicted value |
|---|---|
| 0 | Weighted averaging of attributes of the three nearest neighbors |
| 1 | P4 (attribute value of the nearest neighbor) |
| 2 | P5 (attribute value of the second nearest neighbor) |
| 3 | P0 (attribute value of the third nearest neighbor) |

Finally, an optimal prediction variable is selected by using RDO. A formula for the weighted averaging is as follows:

$$\hat{a}_i = Round\left(\sum_{j=0}^{2}\frac{\tilde{w}_{ij}}{\sum_{j=0}^{2}\tilde{w}_{ij}}\tilde{a}_j\right) \qquad (12)$$

Herein, $\tilde{w}_{ij}$ represents a spatial geometric weight from a neighboring point j to a current point i.

$$\widetilde{w}_{ij} = \frac{1}{\left(x_i - x_{ij}\right)^2 + \left(y_i - y_{ij}\right)^2 + \left(z_i - z_{ij}\right)^2} \tag{13}$$

Herein, $\hat{a}_i$ represents an attribute prediction value of the current point $i$, $j$ represents indexes of the three neighboring points, $\tilde{a}_j$ represents a reconstructed attribute value of the neighboring point, $x_i$, $y_i$, $z_i$ are coordinates of a geometric position of the current point $i$, and $x_{ij}$, $y_{ij}$, $z_{ij}$ are geometric coordinates of the neighboring point $j$.

In a process of quantizing an attribute prediction residual, the attribute prediction value $(\hat{a}_i)_{i \in 0 \ldots k-1}$ (where k is a total quantity of points in a point cloud) is obtained through the foregoing prediction. Assuming that $(a_i)_{i \in 0 \ldots k-1}$ is an original attribute value of the current point, the attribute residual $(r_i)_{i \in 0 \ldots k-1}$ is denoted as:

$$r_i = a_i - \hat{a}_i \tag{14}$$

Further, the prediction residual is quantized:

$$Q_i = \frac{r_i}{Qs} \tag{15}$$

Herein, $Q_i$ represents the quantized attribute residual of the current point $i$, $Qs$ is a quantization step (Quantization step, $Qs$), which may be obtained through calculation by using a quantization parameter $QP$ (Quantization Parameter, $QP$) specified by CTC.

An attribute value is reconstructed at the encoding end to predict a subsequent point. Before the attribute value is reconstructed, a residual is dequantized. $\hat{r}_i$ is denoted as the dequantized residual.

$$\hat{r}_i = Q_i \times Qs \tag{16}$$

$\hat{r}_i$ and the predicted value $\hat{a}_i$ are added, to obtain the reconstructed value $\tilde{a}_i$ of the point $i$:

$$\tilde{a}_i = \hat{r}_i + \hat{a}_i \tag{17}$$

When attribute nearest neighbor search is performed based on LOD partitioning, currently, there are two types of algorithms: intra-frame nearest neighbor search and inter-frame nearest neighbor search. Intra-frame nearest neighbor search is divided into inter-layer nearest neighbor search and intra-layer nearest neighbor search.

FIG. 24 is a schematic diagram of LOD partitioning. As shown in FIG. 24, a pyramid-like structure is obtained by LOD partitioning.

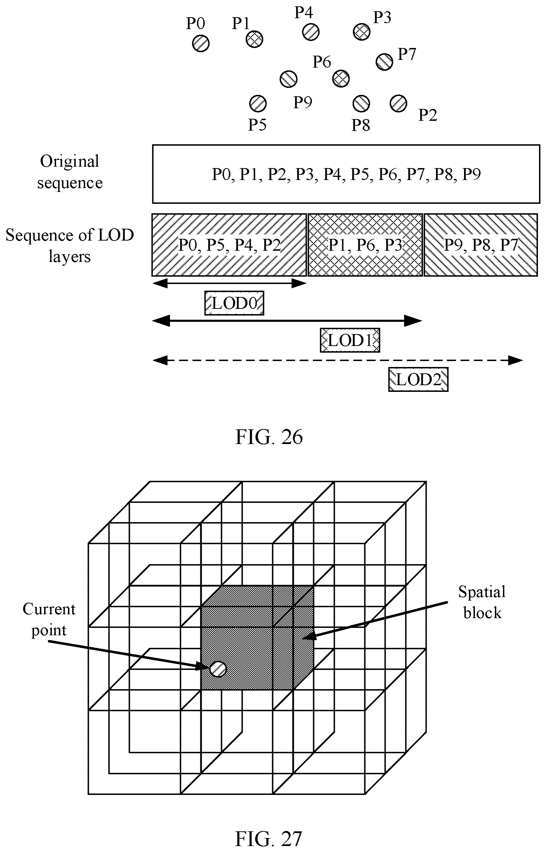

FIG. 25 is a schematic diagram 1 of inter-layer nearest neighbor search, and FIG. 26 is a schematic diagram 2 of inter-layer nearest neighbor search. As shown in the figures, in a process of inter-layer nearest neighbor search, different LOD layers, that is, LOD0, LOD1, and LOD2, are obtained through partitioning based on geometric information. Then, a point at LOD0 may be used to predict an attribute of a point at a next LOD layer.

The following describes in detail an entire process of intra-frame nearest neighbor search.

It may be understood that, in an entire process of LOD partitioning, there are three sets, that is, O(k), L(k), and I(k), where k is an index of an LOD layer during the LOD partitioning, I(k) is an input point set during partitioning of a current LOD layer, the sets O(k) and L(k) are obtained by the LOD partitioning, the set O(k) stores a set of sampling points, and L(k) is a set of points at the current LOD layer. That is, the entire process of the LOD partitioning is as follows.

(1) Initialization

$$if\ k = 0,\ L(k) \leftarrow \{\}.\ \text{Otherwise},\ L(k) \leftarrow L(k-1)$$

$$O(k) \leftarrow \{\}$$

(2) By using an LOD partitioning algorithm, the sampling points are stored in $O(k)$, and the remaining points are allocated to $L(k)$.
(3) When a next time of iteration is performed, $I \leftarrow O(k)$.

It should be noted herein that, because the entire process of the LOD partitioning is performed based on a Morton code, O(k), L(k), and I(k) store Morton code indexes corresponding to points.

When inter-layer nearest neighbor search is performed, that is, nearest neighbor search is performed in the set O(k) for the points in the set L(k), a specific search algorithm is as follows.

Nearest neighbor search is performed based on a spatial relationship. FIG. 27 is a schematic diagram 1 of a spatial relationship. As shown in FIG. 27, when a current point P is predicted, neighbor search is performed by using a parent block (Block B) corresponding to the point P, to search for points in a neighboring block that shares a face or an edge with the current parent block. These points are used for attribute prediction.

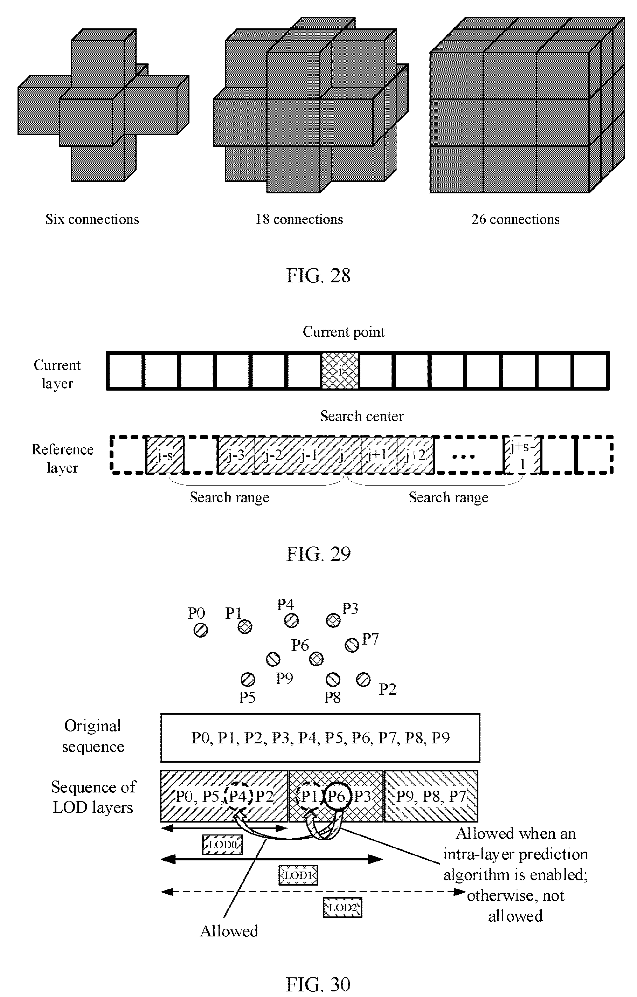

FIG. 28 is a schematic diagram 2 of a spatial relationship. As shown in FIG. 28, a current point has six coplanar neighbors, 18 co-edge neighbors, and 26 co-vertex neighbors.

First, a corresponding spatial block is obtained by using coordinates of the current point, and then nearest neighbor search is performed at a previously encoded LOD layer, to search for a spatial block that shares a face, an edge, or a vertex with the current block, thereby obtaining N neighbors of the current point.

If the N neighbors of the current point are still not obtained after coplanar, co-edge, and co-vertex nearest neighbors are searched for, the N neighbors of the current point are obtained based on a fast search algorithm. FIG. 29 is a schematic diagram 1 of a fast search algorithm. As shown in FIG. 29, in performing inter-layer attribute prediction, first, geometric coordinates of a current to-be-encoded point are used to obtain a Morton code corresponding to the current point. Then, a reference frame is searched, based on the Morton code of the current point, for the first reference point (j) whose Morton code is greater than the Morton code of the current point. Then, nearest neighbor search is performed within a range [j-searchRange, j+searchRange].

Another specific nearest neighbor update algorithm is consistent with an inter-frame nearest neighbor search algorithm. The specific algorithm is mentioned in the inter-frame nearest neighbor search algorithm.

FIG. 30 is a schematic diagram of intra-layer attribute nearest neighbor search. As shown in FIG. 30, for intra-layer nearest neighbor search, when an intra-layer prediction algorithm is enabled, nearest neighbor search is performed in a set of points that have been encoded and at a same LOD layer, to obtain N neighbors of a current point (inter-layer nearest neighbor search is also performed).

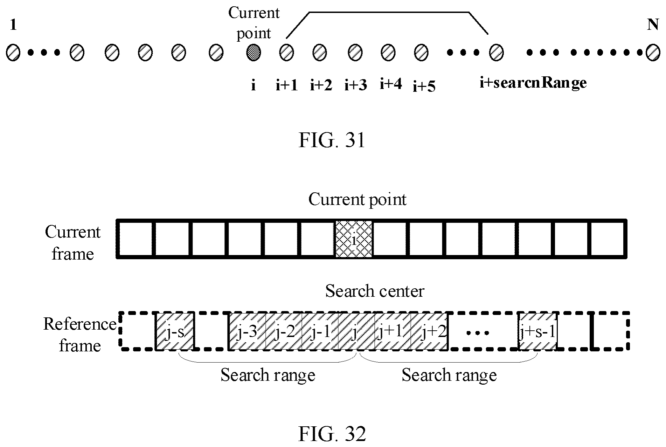

In performing intra-layer attribute prediction, nearest neighbor search is performed based on a fast search algorithm. FIG. 31 is a schematic diagram 2 of a fast search algorithm. As shown in FIG. 31, assuming that an index of a Morton code of a current point is i, nearest neighbor search is performed within [i+1, i+searchRange]. A specific nearest neighbor search algorithm is consistent with an inter-frame fast search algorithm based on a block.

Further, for inter-frame nearest neighbor search, FIG. 32 is a schematic diagram 3 of a fast search algorithm. As shown in FIG. 32, in performing attribute inter prediction, first, geometric coordinates of a current to-be-encoded point are used to obtain a Morton code corresponding to the current point. Then, a reference frame is searched, based on the Morton code of the current point, for the first reference point (j) whose Morton code is greater than the Morton code of the current point. Then, nearest neighbor search is performed within a range [j-searchRange, j+searchRange].

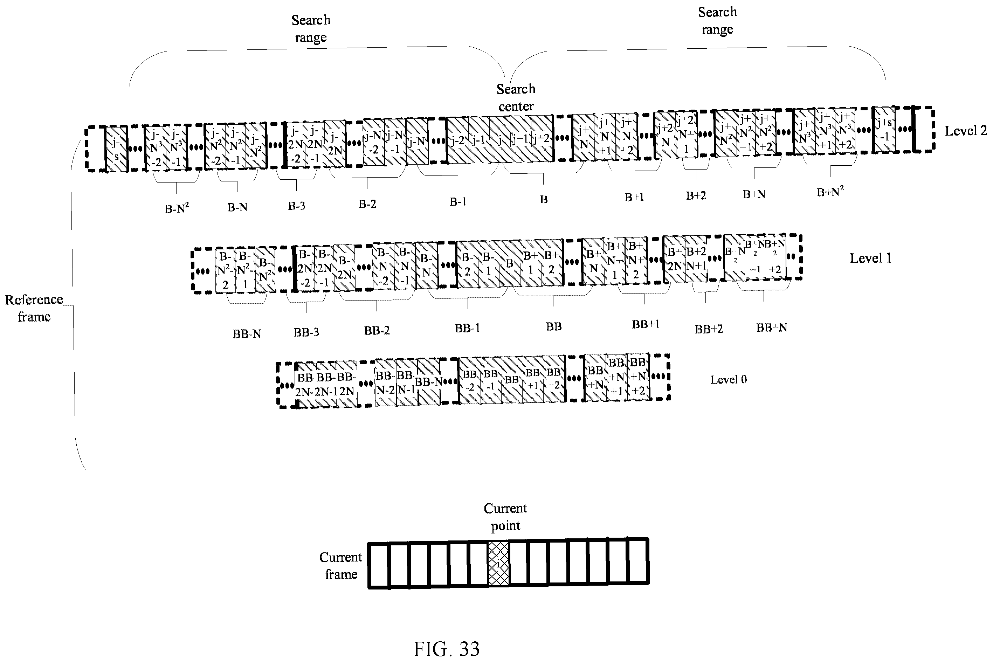

Currently, intra-frame nearest neighbor search and inter-frame nearest neighbor search are performed based on a block. FIG. 33 is a schematic diagram 4 of a fast search algorithm. As shown in FIG. 33, when neighbor search is performed for a current point (whose Morton code index is i), first, points in a reference frame are divided into N (N = 3) layers according to the Morton code. A specific division algorithm is as follows.

First layer: Assuming that a quantity of the points in the reference frame is numPoints, first, every M ($M = 2^5 = 32$) points in the reference frame are allocated to one block.

Second layer: On a basis of the first layer, every M ($M = 2^5 = 32$) blocks at the first layer are allocated to one block according to a sequence of Morton codes.

Third layer: On a basis of the second layer, every M ($M = 2^5 = 32$) blocks at the first layer are allocated to one block according to the sequence of the Morton codes.

Finally, a prediction structure shown in FIG. 33 is obtained. Attribute prediction is performed based on the prediction structure shown in FIG. 33. Assuming that the index of the Morton code of the current to-be-encoded point is i, first, the first point whose Morton code is greater than or equal to the Morton code of the current point is obtained from the reference frame, where an index of this point is j. Then, a block index of the reference point is obtained through calculation based on j. A specific calculation manner is as follows.

First Layer: BucketSize_0 = $2^5$ = 32
Second layer: BucketSize_1 = $2^5$ = 32 $\times$ BucketSize_0 = 1024
Third layer: BucketSize_2 = $2^5$ = 32 $\times$ BucketSize_1 = 32768

Assuming that a reference range in a prediction frame of the current point is [j-searchRange, j+searchRange], a start index of the third layer is obtained through calculation by using j-searchRange, and an end index of the third layer is obtained through calculation by using j+searchRange. Then, it is first determined, in blocks at the third layer, whether nearest neighbor search needs to be performed on some blocks at the second layer. Then, for the second layer, it is determined whether nearest neighbor search needs to be performed for each block at the first layer. If nearest neighbor search needs to be performed for some blocks at the first layer, point-by-point determining is performed on points in the blocks at the first layer, to update nearest neighbors.

For an index-based block calculation algorithm, assuming that the index of the Morton code corresponding to the current point is index, an index of a corresponding block at the third layer is:

$$idx\_2 = index/BucketSize\_2$$

After the index idx_2 of the block at the third layer is obtained, a start index and an end index of a block corresponding to the current block at the second layer may be obtained by using idx_2.

$$startIdx1 = idx\_2 \times BucketSize\_1$$

$$endIdx = idx\_2 \times BucketSize\_1 + BucketSize\_1 - 1$$

Similarly, indexes of a block at the first layer are obtained based on the indexes of the block at the second layer and by using the same algorithm.

In performing nearest neighbor search based on a block, it is first determined whether nearest neighbor search needs to be performed on the current block, that is, screening out blocks for nearest neighbor search. Each spatial block may be represented by two variables minPos and maxPos, where minPos represents a minimum value of the block, and maxPos represents a maximum value of the block.

It is assumed that a distance between the farthest point in N neighbors of the current point obtained through search is Dist, coordinates of the to-be-encoded point are (x, y, z), and the current block is represented as (minPos, maxPos), where minPos is a minimum value of a bounding box in three dimensions, and maxPos is a maximum value of the bounding box in the three dimensions. In this case, a distance D between the current point and the bounding box is calculated as follows:

int dx = int(std::max(std::max(minPos[0] - point[0],0), point[0] - maxPos[0])); int dy = int(std::max(std::max(minPos[1] - point[1],0), point[1] - maxPos[1])); int dz = int(std::max(std::max(minPos[2] - point[2],0), point[2] - maxPos[2])); D = dx + dy + dz;

The points in the current block are traversed only when D is less than or equal to Dist.

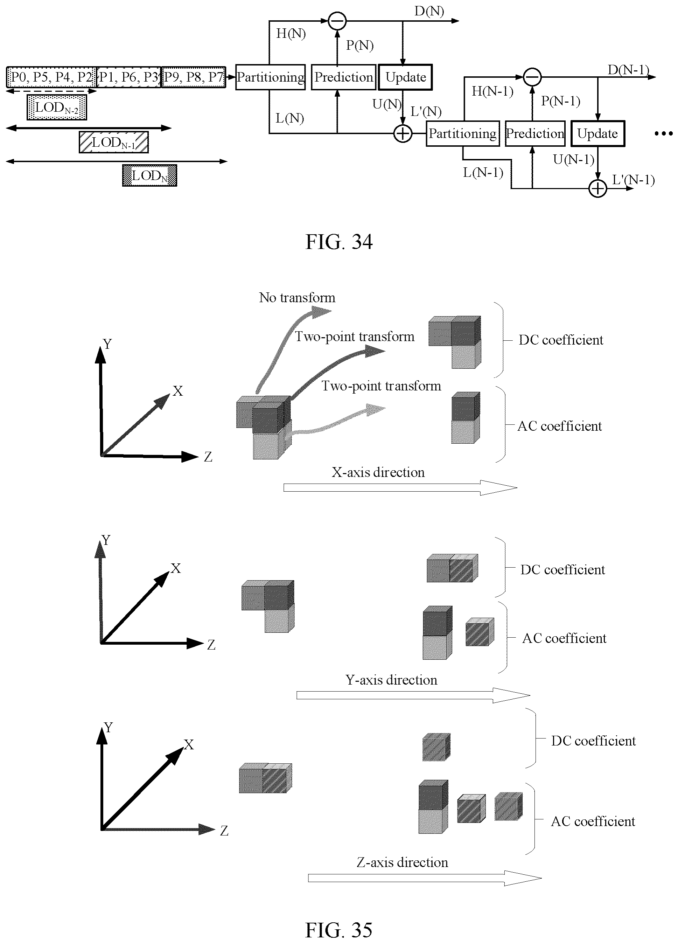

Further, FIG. 34 is a flowchart of lifting transform. As shown in FIG. 34, in lifting transform, predictive encoding is also performed an attribute of a point cloud based on an LOD. Different from predicting transform, in lifting transform, first LODs are divided into high and low layers, prediction is performed in a reverse sequence of generating LOD layers, and quantization weights of points at a low LOD layer are updated by introducing an update operator in a process of the prediction, to improve prediction accuracy. This is because an attribute value of a point at the low LOD layer is frequently used for prediction of an attribute value of a point at a high LOD layer, and the point at the low LOD layer should have greater influence.

Step 1: Partitioning process

In the partitioning process, a complete LOD layer is partitioned into a low LOD layer $L(N)$ and a high LOD layer $H(N)$. If a point cloud has three LOD layers, that is, $(LOD_l)_{l=0,1,2}$, after the partitioning, $LOD_2$ is a high LOD layer and is denoted as $H(N)$, and $(LOD_l)_{l=0,1}$ is a low LOD layer and is denoted as $L(N)$.

Step 2: Prediction process

A point at the high LOD layer selects attribute information of a nearest neighbor from the low layer as an attribute prediction value $P(N)$ of a current to-be-encoded point, and a prediction residual $D(N)$ is denoted as:

$$D(N) = H(N) - P(N) \qquad (18)$$

Step 3: Update process

An attribute prediction residual $D(N)$ at the high LOD layer is updated, to obtain $U(N)$, and $U(N)$ is used to improve an attribute value of a point at the low LOD layer, as shown in the following formula:

$$L'(N) = L(N) + U(N) \qquad\qquad (19)$$

The foregoing processes are continuously iterated in descending order of LODs until the lowest LOD layer is processed.

Because the LOD-based prediction solution enables a point at a low LOD layer to have greater influence, in a lifting wavelet transform solution, a quantization weight is introduced, and a prediction residual D(N) is updated according to a distance between the prediction residual and a neighboring point and a distance between a prediction point and the neighboring point. Finally, adaptive quantization is performed on the prediction residual by using the quantization weight in the transform process. It should be noted that, at a decoding end, a quantization weight value of each point may be determined through geometric reconstruction. Therefore, the quantization weight does not need to be encoded.

As a type of Haar wavelet transform, region adaptive hierarchal transform (RAHT) may transform attribute information of a point cloud from a spatial domain to a frequency domain, thereby further reducing correlation between attributes of the point cloud. FIG. 35 is a schematic diagram of a process of RAHT transform in three directions *x, y,* and *z*. As shown in FIG. 35, nodes at each layer are transformed from three dimensions *x, y,* and *z* from bottom to top according to an octree structure, and are iterated until a root node of the octree is processed.

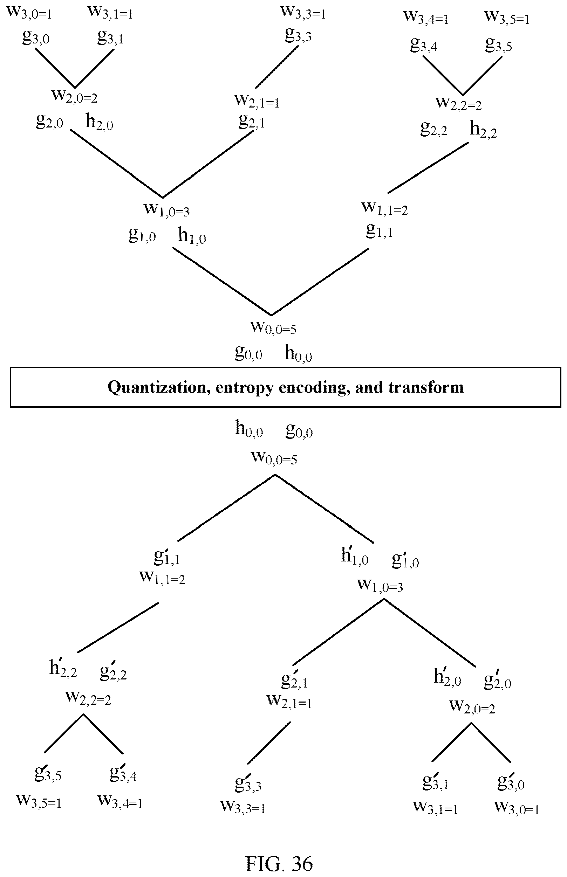

FIG. 36 is a schematic diagram of RAHT transform. As shown in FIG. 36, RAHT is wavelet transform performed based on a hierarchical structure of an octree. Attribute information is associated with a node of the octree, recursive transform is performed from bottom to top on attributes of occupied nodes in a same parent node, and nodes at each layer are transformed from three dimensions x, y, and z until a root node of the octree is processed. In a hierarchical transform process, low-pass (DC) coefficients obtained by performing transform on nodes at a same layer are transferred to nodes at a next layer for further transform, and all high-pass (AC) coefficients are encoded by using an arithmetic encoder.

During the transform, the DC coefficients (a direct current component) obtained by performing transform on the nodes at the same layer are transferred to an upper layer for further transform, and quantization encoding is performed on AC coefficients (an alternating current component) obtained in each layer by the transform. The following describes main transform processes.

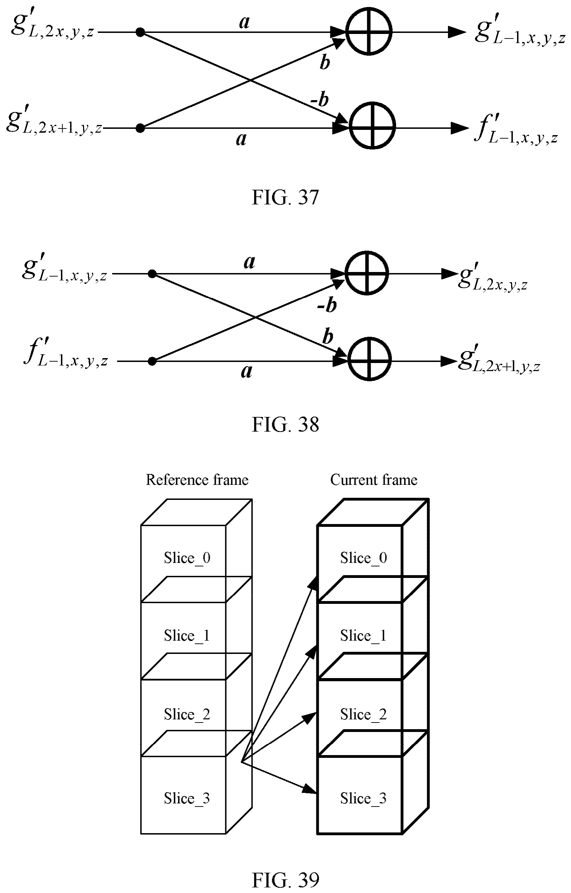

FIG. 37 is a schematic diagram of RAHT transform, and FIG. 38 is a schematic diagram of inverse RAHT transform. As shown in the figures, it is assumed that $g'_{L,2x,y,z}$ and $g'_{L,2x+1,y,z}$ are two attribute DC coefficients of two neighboring points at a layer L. After linear transform is performed, information about a layer L-1 is an AC coefficient $f'_{L-1,x,y,z}$ and a DC coefficient $g'_{L-1,x,y,z}$ . Then, transform is no longer performed on $f'_{L-1,x,y,z}$ , and quantization encoding is directly performed. Neighbor search is performed on $g'_{L-1,x,y,z}$ for transform. If no neighbor is found, $g'_{L-1,x,y,z}$ is directly transferred to a layer L-2. That is, RAHT transform is only valid for a node that has a neighboring node, and a node without a neighboring node is directly transferred to an upper layer. In the foregoing transform process, weights (quantities of non-empty subnodes in the node) corresponding to $g'_{L,2x,y,z}$ and $g'_{L,2x+2,y,z}$ are respectively $w'_{L,2x,y,z}$ and $w'_{L,2x+1,y,z}$ ( $w'_0$ and $w'_1$ for short), a weight of $g'_{L-1,x,y,z}$ is $w'_{L-1,x,y,z}$ , and a general transform formula is:

$$\begin{bmatrix} g'_{L-1,x,y,z} \\ f'_{L-1,x,y,z} \end{bmatrix} = T_{w0,w1} \begin{bmatrix} g'_{L,2x,y,z} \\ g'_{L,2x+1,y,z} \end{bmatrix} \qquad\qquad (20)$$

In this formula, $T_{w0,\,w1}$ is a transform matrix, which is calculated as follows:

$$T_{w0,w1} = \frac{1}{\sqrt{w'_0 + w'_1}} \begin{bmatrix} \sqrt{w'_0} & \sqrt{w'_1} \\ -\sqrt{w'_1} & \sqrt{w'_0} \end{bmatrix} \qquad\qquad (21)$$

The transform matrix is adaptively updated with a weight corresponding to each point. The foregoing process is iteratively updated according to a partitioning structure of an octree until a root node of the octree is processed.

Currently, attribute inter prediction in G-PCC is performed on a per-slice basis. A specific encoding and decoding process is as follows.

Step 1: Determine whether to use attribute inter prediction. If attribute inter prediction can be performed on a current frame, attribute prediction is performed on a current slice. Otherwise, only intra prediction is used for an attribute of the current slice.

Step 2: After the attribute of the current slice is encoded, save an attribute of a point in the current slice for subsequent inter prediction.

Step 3: Determine whether all slices of the current frame are encoded. If all the slices are encoded, encode a next frame of a point cloud, and save a point cloud attribute of the last slice of the current frame.

FIG. 39 is a schematic diagram of slice-based attribute prediction. As shown in FIG. 39, there is a main problem in such an inter prediction algorithm. In a case that a frame has a plurality of slices, when attribute inter prediction is used for a P-frame or a B-frame, only a point cloud attribute of the last slice in a reference frame can be used for a slice in a current frame. As a result, attribute redundancy between neighboring frames cannot be effectively removed, and attribute encoding efficiency is relatively low.

That is, in common inter prediction algorithms, processing is performed on a per-slice basis. Therefore, when attribute inter prediction is used, point cloud attributes obtained by encoding or decoding a current slice are stored for inter prediction. Therefore, the following two different cases will have different results.

In a case that the current frame has only one slice, each slice is a frame of the point cloud. Therefore, inter reference attribute update on a per-slice basis is equivalent to reference attribute update on a per-frame basis.

In a case that the current frame has a plurality of slices, if inter reference attribute update is still performed on a per-slice basis. when performing inter prediction on an attribute of a predicted frame, the slices in the current frame can use an attribute of a point in only the last encoded slice of the reference frame.

To resolve the foregoing problem, in embodiments of this application, when performing attribute inter prediction, all attributes and points in the reference frame are stored. When encoding the attribute of the predicted frame, points in the reference frame are partitioned according to a position of each slice in the predicted frame, to acquire a prediction unit that corresponds to the current slice and that is in the reference frame. Then, attribute inter prediction is performed on a to-be-encoded slice in the current frame by using the prediction unit in the reference frame.

Embodiments of this application provide an encoding method and a decoding method. A codec determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

The following describes embodiments of this application in detail with reference to the accompanying drawings.

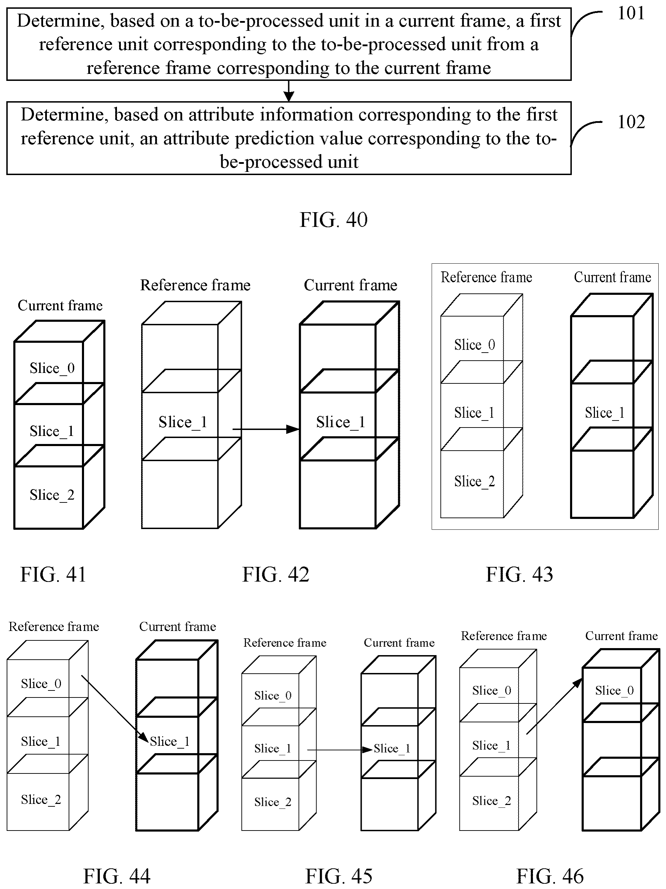

In an embodiment of this application, referring to FIG. 40, FIG. 40 is a schematic flowchart of a decoding method according to this embodiment of this application. As shown in FIG. 40, the method may include the following steps:

Step 101: Determine, based on a to-be-processed unit in a current frame, a first reference unit corresponding to the to-be-processed unit from a reference frame corresponding to the current frame.

In this embodiment of this application, first, the first reference unit corresponding to the to-be-processed unit may be determined from the reference frame corresponding to the current frame based on the to-be-processed unit in the current frame. The first reference unit in the reference frame may be used to perform prediction processing on attribute information of the to-be-processed unit in the current frame.

It should be noted that, the decoding method in this embodiment of this application specifically refers to a point cloud decoding method. This method may be applied to a point cloud decoder (or may be referred to as a "decoder" for short).

Correspondingly, in this embodiment of this application, the current frame may be a to-be-decoded video frame.

Further, in this embodiment of this application, division processing may be first performed on the current frame, so that at least one to-be-processed unit may be determined. That is, in this application, after the division processing is performed, the current frame may be divided into any quantity of to-be-processed units. This application sets no limitation on the quantity of the to-be-processed units in the current frame.

Exemplarily, in some embodiments, the current frame may be divided into one to-be-processed unit. Correspondingly, the to-be-processed unit may be understood as the current frame, that is, the to-be-processed unit is one frame of a point cloud.

Exemplarily, in some embodiments, the current frame may be divided into N to-be-processed units, where N is an integer greater than 1. Correspondingly, the N to-be-processed units may form the current frame, that is, the N to-be-processed units may form one frame of a point cloud.

It should be noted that, in this embodiment of this application, a to-be-processed unit of the current frame obtained by the division may include at least one point. When decoding the to-be-processed unit, the at least one point in the to-be-processed unit may be used as a to-be-decoded node in the to-be-processed unit.

Exemplarily, in this embodiment of this application, the to-be-processed unit may be a minimum unit corresponding to a process of decoding the current frame. For example, the to-be-processed unit may be a slice obtained by dividing the current frame.

Exemplarily, in some embodiments, after the division processing is performed on the current frame, one corresponding slice may be obtained. Alternatively, after the division processing is performed on the current frame, N corresponding slices may be obtained. For example, FIG. 41 is a schematic diagram of the to-be-processed unit of the current frame. As shown in FIG. 41, the current frame may be divided into three to-be-processed units, which are respectively Slice _0, Slice_1, and Slice_2.

Further, in embodiments of this application, each point in a to-be-processed unit corresponds to a piece of geometric information and a piece of attribute information, where the geometric information represents a spatial relationship of the point, and the attribute information represents information related to an attribute of the point.

Herein, the attribute information may be color information, reflectance, or another attribute, which is not specifically limited in embodiments of this application. When the attribute information is color information, the attribute information may be specifically color information in any color space. Exemplarily, the attribute information may be color information in an RGB space, color information in a YUV space, or color information in a YCbCr space, which is not specifically limited in embodiments of this application.

Further, in embodiments of this application, the current frame may be a P-frame. Alternatively, the current frame is a B-frame.

It may be understood that several consecutive images may be classified into three types: P, B, and I. An I-frame (Intra-coded frame) is also referred to as a key frame. The I-frame is an independent frame and does not depend on information about another frame. The I-frame includes complete image information, and therefore has a relatively poor compression effect. However, the I-frame can be independently decoded. A P-frame (Predicted frame) depends on a previous I-frame or a previous P-frame. The P-frame not only stores image information, but also records an image variation. Therefore, the P-frame has a better compression effect than the I-frame. A B-frame (Bidirectional frame) depends on a previous I-frame or P-frame and a next I-frame or P-frame. The B-frame can predict an image from a plurality of directions, and therefore has a better compression effect than the P-frame. However, the B-frame cannot be independently decoded and must be used with a neighboring I-frame or a neighboring P-frame.

It should be noted that, in embodiments of this application, the first reference unit may be a reconstructed unit in the reference frame corresponding to the current frame. Alternatively, the first reference unit may include at least one point. The at least one point in the first reference unit is a reconstructed point, that is, a decoded node in the reference frame.

Further, in determining the first reference unit corresponding to the to-be-processed unit from the reference frame corresponding to the current frame based on the to-be-processed unit in the current frame, dimension information and position information of a bounding box corresponding to the to-be-processed unit may be first determined. Then, the first reference unit is determined from the reference frame based on the dimension information and the position information.

It should be noted that, in embodiments of this application, a size and a position of the bounding box of the to-be-processed unit, that is, the dimension information and the position information of the bounding box corresponding to the to-be-processed unit, may be first determined. Then, the reference frame is searched for a corresponding reference unit by using the dimension information and the position information, to finally obtain a corresponding first reference unit.

It may be understood that, in embodiments of this application, if the first reference unit is determined based on the dimension information and the position information of the bounding box, a size and a position of a bounding box corresponding to the obtained first reference unit may be determined according to the size and the position of the bounding box corresponding to the to-be-processed unit.

Further, in embodiments of this application, in determining the first reference unit from the reference frame based on the dimension information and the position information, partitioning processing may be first performed on the reference frame according to the dimension information and the position information, to determine a first candidate unit corresponding to the to-be-processed unit. Then, the first candidate unit may be determined as the first reference unit.

It may be understood that, in embodiments of this application, the first candidate unit obtained by performing the partitioning processing on the reference frame may be a unit that is in the reference frame and that corresponds to the dimension information and the position information of the bounding box of the to-be-processed unit.

That is, in embodiments of this application, after the dimension information and the position information of the bounding box corresponding to the to-be-processed unit are determined, the first reference unit corresponding to the to-be-processed unit may be directly obtained by partitioning the reference frame according to the dimension information and the position information.

It may be understood that, in embodiments of this application, the size of the bounding box corresponding to the first reference unit may be the same as the size of the bounding box corresponding to the to-be-processed unit. Therefore, the first reference point unit may have a same size as the to-be-processed unit.

It may be understood that, in embodiments of this application, the position of the bounding box corresponding to the first reference unit in the reference frame may be the same as the position of the bounding box corresponding to the to-be-processed unit in the current frame. Therefore, the first reference point unit and the to-be-processed unit may have corresponding positions.

It can be learned that, in embodiments of this application, the first reference unit may be a reference unit that is in the reference frame and that corresponds to a size and a position of the to-be-processed unit. For example, FIG. 42 is a schematic diagram 1 of the first reference unit. As shown in FIG. 42, the to-be-processed unit is Slice_1 in the current frame. Correspondingly, the first reference unit determined based on the dimension information and the position information of the bounding box corresponding to the to-be-processed unit may be Slice_1 in the reference frame.

Further, in embodiments of this application, in determining the first reference unit from the reference frame based on the dimension information and the position information, partitioning processing may be first performed on the reference frame according to the dimension information and the position information, to determine second candidate units corresponding to the to-be-processed unit. Then, at least one second reference unit corresponding to the to-be-processed unit may be determined from the reference frame based on the second candidate units and the position information. Finally, the first reference unit may be determined from the at least one second reference unit.

It may be understood that, in embodiments of this application, the second candidate units obtained by performing the partitioning processing on the reference frame may be at least one unit that is in the reference frame and that corresponds to the dimension information and the position information of the bounding box of the to-be-processed unit.

It may be understood that, in embodiments of this application, the at least one second reference unit may be obtained by screening the second candidate units based on the position information of the bounding box. Therefore, the at least one second reference unit may correspond to the position information of the bounding box of the to-be-processed unit.

It should be noted that, in embodiments of this application, the second candidate units may be units directly obtained by performing the partitioning processing on the reference frame, and the second reference unit is obtained by screening the second candidate units by using the position information of the bounding box of the to-be-processed unit. Therefore, the second reference unit may be considered as a unit that is among the second candidate units and that has relatively high correlation with the position of the bounding box of the to-be-processed unit.

Exemplarily, in some embodiments, the second reference unit may include a reference unit that is in the reference frame and that corresponds to the dimension information and the position information of the bounding box corresponding to the to-be-processed unit, or may include another reference unit that is neighboring to the reference frame that corresponds to the dimension information and the position information of the bounding box corresponding to the to-be-processed unit. For example, FIG. 43 is a schematic diagram of the second reference unit. As shown in FIG. 43, the to-be-processed unit is Slice_1 in the current frame. Correspondingly, the second reference unit determined based on the position information of the bounding box corresponding to the to-be-processed unit may be Slice_0, Slice_1, and Slice_2 in the reference frame.

That is, in embodiments of this application, after the dimension information and the position information of the bounding box corresponding to the to-be-processed unit are determined, at least one second candidate unit corresponding to the to-be-processed unit may be first obtained by partitioning the reference frame according to the dimension information and the position information. Then, at least one second reference unit may be determined from the second candidate unit by using the position information of the bounding box. Finally, the first reference unit may be selected from the at least one second reference unit.

It should be noted that, in embodiments of this application, in determining the first reference unit from the at least one second reference unit, a rate-distortion optimal algorithm may be used to determine an optimal reference unit from the at least one second reference unit as the first reference unit.

It may be understood that, in embodiments of this application, a size of a bounding box corresponding to the second candidate unit, a size of a bounding box corresponding to the second reference unit, and the size of the bounding box corresponding to the first reference unit may be the same as the size of the bounding box corresponding to the to-be-processed unit. Therefore, the second candidate unit, the second reference unit, and the first reference point unit may have a same size as the to-be-processed unit.

It may be understood that, in embodiments of this application, the position of the bounding box corresponding to the first reference unit in the reference frame may be the same as or different from the position of the bounding box corresponding to the to-be-processed unit in the current frame.

It can be learned that, in embodiments of this application, the first reference unit may alternatively not be directly obtained through partitioning, but may be selected from the at least one second reference unit.

Exemplarily, in some embodiments, FIG. 44 is a schematic diagram 2 of the first reference unit. As shown in FIG. 44, the to-be-processed unit is Slice_1 in the current frame, the second reference unit may be Slice_0, Slice_1, and Slice_2 in the reference frame, and the finally determined optimal first reference unit may be Slice_0 in the reference frame.

Exemplarily, in some embodiments, FIG. 45 is a schematic diagram 3 of the first reference unit. As shown in FIG. 45, the to-be-processed unit is Slice_1 in the current frame, the second reference unit may be Slice_0, Slice_1, and Slice_2 in the reference frame, and the finally determined optimal first reference unit may be Slice_1 in the reference frame.

Further, in embodiments of this application, in determining the first reference unit from the reference frame based on the dimension information and the position information, partitioning processing may be first performed on the reference frame according to the dimension information and the position information, to determine at least one third reference unit. Then, the first reference unit is determined from the at least one third reference unit.

It may be understood that, in embodiments of this application, the at least one third reference unit obtained by performing the partitioning processing on the reference frame may be at least one unit that is in the reference frame and that corresponds to the dimension information and the position information of the bounding box of the to-be-processed unit.

That is, in embodiments of this application, after the dimension information and the position information of the bounding box corresponding to the to-be-processed unit are determined, at least one third candidate unit corresponding to the to-be-processed unit may be first obtained by partitioning the reference frame according to the dimension information and the position information. Then, the first reference unit may be selected from the at least one third reference unit.

It should be noted that, in embodiments of this application, in determining the first reference unit from the at least one third reference unit, a rate-distortion optimal algorithm may be used to determine an optimal reference unit from the at least one third reference unit as the first reference unit.

It may be understood that, in embodiments of this application, a size of a bounding box corresponding to the third reference unit and the size of the bounding box corresponding to the first reference unit may be the same as the size of the bounding box corresponding to the to-be-processed unit. Therefore, the third reference unit and the first reference point unit may have a same size as the to-be-processed unit.

It may be understood that, in embodiments of this application, the position of the bounding box corresponding to the first reference unit in the reference frame may be the same as or different from the position of the bounding box corresponding to the to-be-processed unit in the current frame.

It can be learned that, in embodiments of this application, the first reference unit may alternatively not be directly obtained through partitioning, but may be selected from the at least one third reference unit obtained by partitioning.

Exemplarily, in some embodiments, FIG. 46 is a schematic diagram 4 of the first reference unit. As shown in FIG. 46, the to-be-processed unit is Slice_0 in the current frame, the third reference unit may be Slice_0, Slice_1, and Slice_2 in the reference frame, and the finally determined optimal first reference unit may be Slice_1 in the reference frame.

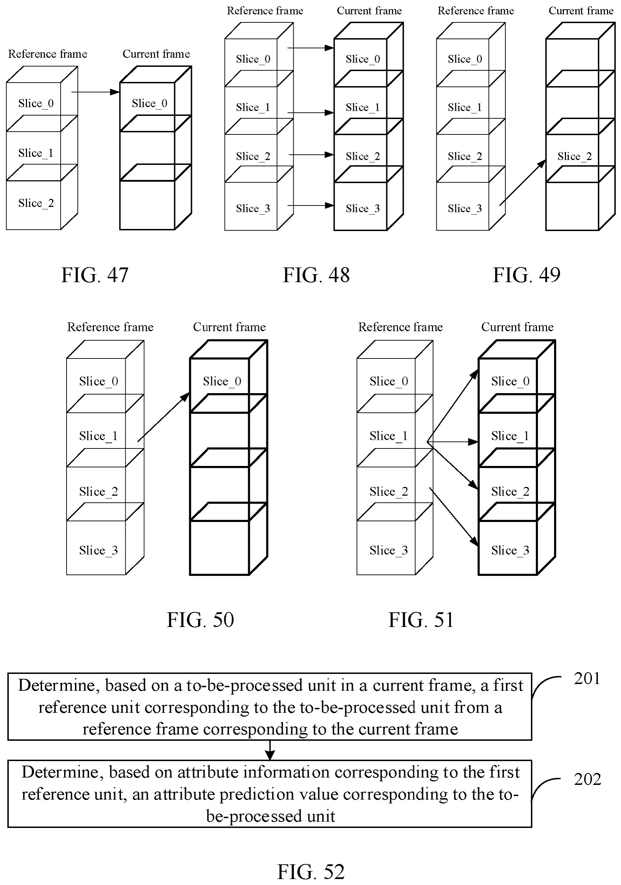

Exemplarily, in some embodiments, FIG. 47 is a schematic diagram 5 of the first reference unit. As shown in FIG. 47, the to-be-processed unit is Slice_0 in the current frame, the third reference unit may be Slice_0, Slice_1, and Slice_2 in the reference frame, and the finally determined optimal first reference unit may be Slice_0 in the reference frame.

In conclusion, in embodiments of this application, in performing prediction processing on attribute information of the to-be-processed unit in the current frame, the first reference unit may be first selected from the reference frame. The first reference unit is not limited to the last slice in the reference frame, but may be determined from the reference frame based on the dimension information and the position information of the bounding box corresponding to the to-be-processed unit.

It may be understood that, in embodiments of this application, in determining the first reference unit from the reference frame, the corresponding first reference unit may be directly obtained by partitioning the reference frame according to the dimension information and the position information of the bounding box corresponding to the to-be-processed unit. Alternatively, the reference frame may be first partitioned according to the dimension information and the position information of the bounding box corresponding to the to-be-processed unit, to obtain the second candidate unit, then the at least one second reference unit is determined from the second candidate unit, and finally the optimal first reference unit is selected from the at least one second reference unit. Alternatively, the reference frame may be first partitioned according to the dimension information and the position information of the bounding box corresponding to the to-be-processed unit, to obtain the at least one third reference unit, and finally the optimal first reference unit is selected from the at least one third reference unit.

Further, in embodiments of this application, a bitstream may be first decoded, to determine prediction mode identification information corresponding to the current frame. If a value of the prediction mode identification information is a first value, it is determined that a prediction mode corresponding to the to-be-processed unit is an inter prediction mode; or if a value of the prediction mode identification information is a second value, it is determined that a prediction mode corresponding to the to-be-processed unit is an intra prediction mode.

It may be understood that, in embodiments of this application, the prediction mode identification information may be used to indicate whether inter prediction is used for attribute information of the current frame.

It should be noted that, in embodiments of this application, the first value is different from the second value, and the first value and the second value may be in a parametric form or a numeric form.

Exemplarily, in some embodiments, the value of the prediction mode identification information is determined through decoding by using an example in which the first value is set to 1 and the second value is set to 0. If the value of the prediction mode identification information is 1, it may be determined that inter prediction can be used for the attribute information of the current frame. Further, the first reference unit of the to-be-processed unit in the current frame may be determined from the reference frame based on the foregoing method. If the value of the prediction mode identification information is 0, it may be determined that inter prediction cannot be used for the attribute information of the current frame. In this case, prediction processing is performed on the attribute information of the to-be-processed unit in the current frame in a manner of intra prediction.

That is, in embodiments of this application, if it is determined by decoding the bitstream that the value of the prediction mode identification information corresponding to the current frame is the first value, that is, it is determined that the prediction mode corresponding to the to-be-processed unit is the inter prediction mode, a procedure of determining the first reference unit may be executed, that is, the processing procedure in step 101 is executed.

Further, in embodiments of this application, if it is determined by decoding the bitstream that the value of the prediction mode identification information corresponding to the current frame is the first value, that is, it is determined that the prediction mode corresponding to the to-be-processed unit is the inter prediction mode, the bitstream may be further decoded, to further determine reference unit identification information corresponding to the to-be-processed unit. Then, the first reference unit corresponding to the to-be-processed unit is determined from the reference frame based on the reference unit identification information.

It should be noted that, in embodiments of this application, the reference unit identification information corresponding to the to-be-processed unit may indicate identification information such as position information and/or dimension information and/or index information that is of the first reference unit corresponding to the to-be-processed unit and that is in the reference frame. Therefore, after the corresponding reference unit indication information is obtained through the decoding, the corresponding first reference unit may be determined from the reference frame based on the reference unit indication information.

That is, in embodiments of this application, alternatively, a decoding end may directly determine the first reference unit corresponding to the to-be-processed unit from the reference frame by using the reference unit identification information transmitted in the bitstream.

Step 102: Determine, based on attribute information corresponding to the first reference unit, an attribute prediction value corresponding to the to-be-processed unit.

In embodiments of this application, after the first reference unit corresponding to the to-be-processed unit is determined from the reference frame corresponding to the current frame based on the to-be-processed unit in the current frame, the attribute prediction value corresponding to the to-be-processed unit may be further determined based on the attribute information corresponding to the first reference unit.

Further, in embodiments of this application, in determining the attribute prediction value corresponding to the to-be-processed unit based on the attribute information corresponding to the first reference unit, the attribute prediction value corresponding to the to-be-processed unit may be determined based on a reconstructed attribute value of a point in the first reference unit.

It may be understood that, in embodiments of this application, in predicting the attribute information corresponding to the to-be-processed unit, the reconstructed attribute value of the point in the first reference unit may be first determined. Then, attribute information of a point in the to-be-processed unit is predicted by using the reconstructed attribute value of the point in the first reference unit, to obtain a predicted value of the corresponding point. Finally, the attribute prediction value corresponding to the to-be-processed unit may be determined based on the predicted value of the point in the to-be-processed unit.

It should be noted that, in embodiments of this application, the at least one point included in the first reference unit is a reconstructed point, that is, a decoded node. Therefore, in predicting the attribute information of the to-be-processed unit, predicted values of all or some of corresponding points in the to-be-processed unit may be determined based on reconstructed values of all or some of points in the first reference unit, to determine the attribute prediction value corresponding to the to-be-processed unit.

Further, in embodiments of this application, a bitstream is decoded, to determine a prediction residual corresponding to the to-be-processed unit, and then a reconstructed attribute value corresponding to the to-be-processed unit is determined based on the prediction residual and the attribute prediction value.

It may be understood that, in embodiments of this application, after the attribute prediction value corresponding to the to-be-processed unit is determined, reconstruction processing may be performed on the attribute information of the to-be-processed unit by using the attribute prediction value. The reconstructed attribute value corresponding to the to-be-processed unit may be determined based on the prediction residual corresponding to the to-be-processed unit and obtained by decoding the bitstream and the attribute prediction value.

Exemplarily, in some embodiments, summation calculation may be performed on the prediction residual and the attribute prediction value corresponding to the to-be-processed unit, to obtain the reconstructed attribute value corresponding to the to-be-processed unit.

Further, in embodiments of this application, after the reconstruction processing on the attribute information of the to-be-processed unit is completed, and the corresponding reconstructed attribute value is obtained, the reconstructed attribute value corresponding to the to-be-processed unit may be stored.

It may be understood that, in embodiments of this application, the reconstructed attribute value corresponding to the to-be-processed unit in the current frame is stored, so that in a subsequent decoding procedure, the stored reconstructed attribute value corresponding to the to-be-processed unit in the current frame can be used to perform inter prediction on attribute information of a to-be-processed unit in another frame.

It should be noted that, in embodiments of this application, the reconstructed attribute value corresponding to the to-be-processed unit may be stored once the attribute information of the to-be-processed unit is reconstructed, or reconstructed attribute values of all to-be-processed units in the current frame may be stored only after all of them are obtained.

It can be learned that, in embodiments of this application, in performing attribute inter prediction on an attribute of a point cloud, all points in a reference frame and attributes of the points may be stored in advance. In encoding or decoding an attribute of a point in a predicted frame subsequently, the points in the reference frame are partitioned according to a size and a position corresponding to each to-be-processed unit (for example, a slice) in the predicted frame, to acquire a prediction unit (first reference unit) that corresponds to the to-be-processed unit and that is in the reference frame. Further, attribute inter prediction may be performed on a to-be-processed unit in a current frame by using the prediction unit in the reference frame.

Exemplarily, in some embodiments, it is assumed that the to-be-processed unit is a current slice that is in the current frame and that is to be encoded and decoded. In this case, it may be first determined whether inter prediction is used to predict the attribute information of the current frame. If attribute inter prediction is used for the current frame, a prediction reference unit (first reference unit) corresponding to the current slice may be acquired from the reference frame by using dimension information and position information of a bounding box corresponding to the current slice. Then, inter prediction is performed on attribute information of the current slice by using a reconstructed attribute value of the prediction reference unit, to obtain an attribute prediction value of the current slice, thereby completing reconstruction of the attribute information of the current slice. Each slice in the current frame is sequentially processed according to the foregoing method. After the last slice of the current frame is encoded, reconstructed attribute values of all point clouds of the current frame may be stored for attribute inter prediction of a subsequent frame.

In conclusion, in embodiments of this application, in performing attribute inter prediction, the prediction reference unit (first reference unit) of the current slice unit (to-be-processed unit) that is to be encoded and decoded may be acquired from the reference frame by using the dimension information and the position information of the bounding box. In this way, attribute redundancy between neighboring frames can be further removed, and attribute interframe encoding efficiency of a point cloud can be further improved.

It should be noted that, in embodiments of this application, the corresponding prediction reference unit may be directly obtained from the reference frame by using the dimension information and the position information of the bounding box of the current slice unit that is to be encoded and decoded. Alternatively, a plurality of neighboring reference units (second reference units or third reference units) may be acquired from the reference frame by using the dimension information and the position information of the bounding box of the current slice unit that is to be encoded and decoded, and then a rate-distortion optimal criterion is used to obtain an optimal prediction unit (first reference unit).

Exemplarily, in some embodiments, FIG. 48 is a schematic diagram 1 of attribute inter prediction. As shown in FIG. 48, for to-be-processed units Slice_0, Slice_1, Slice_2, and Slice_3 in the current frame, the reference frame is directly partitioned according to dimension information and position information of bounding boxes corresponding to the to-be-processed units, to obtain corresponding first reference units, which are respectively Slice_0, Slice_1, Slice_2, and Slice_3 in the reference frame.

Exemplarily, in some embodiments, FIG. 49 is a schematic diagram 2 of attribute inter prediction. As shown in FIG. 49, for a to-be-processed unit Slice_2 in the current frame, corresponding second candidate units, that is, Slice_0, Slice_1, Slice_2, and Slice_3 in the reference frame, may be obtained by partitioning the reference frame according to dimension information and position information of a bounding box corresponding to the to-be-processed unit. Then, second reference units corresponding to the to-be-processed unit, that is, Slice_1, Slice_2, and Slice_3, are determined from the second candidate units. Finally, a rate-distortion optimal algorithm is used to determine that the first reference unit is Slice_3.

Exemplarily, in some embodiments, FIG. 50 is a schematic diagram 3 of attribute inter prediction. As shown in FIG. 50, for a to-be-processed unit Slice_0 in the current frame, corresponding third reference units, that is, Slice_0, Slice_1, Slice_2, and Slice_3 in the reference frame, may be obtained by partitioning the reference frame according to dimension information and position information of a bounding box corresponding to the to-be-processed unit. Then, a rate-distortion optimal algorithm is used to determine, from the third reference units, a first reference unit corresponding to the to-be-processed unit, that is, Slice_1.

Exemplarily, in some embodiments, FIG. 51 is a schematic diagram 4 of attribute inter prediction. As shown in FIG. 51, for to-be-processed units Slice_0, Slice_1, Slice_2, and Slice_3 in the current frame, corresponding third reference units, that is, Slice_0, Slice_1, Slice_2, and Slice_3 in the reference frame, may be obtained by partitioning the reference frame according to dimension information and position information of bounding boxes corresponding to the to-be-processed units. Then, a rate-distortion optimal algorithm is used to separately determine, from the third reference units, first reference units corresponding to the to-be-processed units, where first reference units corresponding to Slice_0, Slice_1, and Slice_2 are all Slice_1, and a first reference unit corresponding to Slice_3 is Slice_2.

It can be learned that, in embodiments of this application, a corresponding prediction reference unit may be acquired from a prediction frame by using a size and a position of a current slice that is to be encoded and decoded, and then inter prediction may be performed on an attribute of a point in the current slice by using an attribute of the prediction reference unit. The corresponding prediction reference unit may be obtained from a reference frame by using a size and a position of a bounding box of the current slice, or an optimal prediction reference unit may be selected by using a rate-distortion optimal criterion.

That is, in embodiments of this application, in performing the attribute inter prediction on the attribute of the point in the current slice of a current frame, a corresponding slice prediction unit may be obtained from the reference frame according to the size and the position of the bounding box of the current slice. Then, a neighboring slice unit is acquired based on the bounding box of the slice. Then, a rate-distortion optimal criterion is used to acquire an optimal prediction unit as a prediction reference unit. Finally, inter prediction may be performed on attribute information of the current slice by using a reconstructed attribute value of the optimal prediction reference unit.

An embodiment of this application provides a decoding method. A decoder determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

An embodiment of this application proposes an encoding method. FIG. 52 is a schematic flowchart of the encoding method according to this embodiment of this application. As shown in FIG. 52, in performing encoding processing on a point cloud, the following steps may be included.

Step 201: Determine, based on a to-be-processed unit in a current frame, a first reference unit corresponding to the to-be-processed unit from a reference frame corresponding to the current frame.

In this embodiment of this application, first, the first reference unit corresponding to the to-be-processed unit may be determined from the reference frame corresponding to the current frame based on the to-be-processed unit in the current frame. The first reference unit in the reference frame may be used to perform prediction processing on attribute information of the to-be-processed unit in the current frame.

It should be noted that, the encoding method in this embodiment of this application specifically refers to a point cloud encoding method. This method may be applied to a point cloud encoder (or may be referred to as an "encoder" for short).

Correspondingly, in this embodiment of this application, the current frame may be a to-be-encoded video frame.

Further, in this embodiment of this application, division processing may be first performed on the current frame, so that at least one to-be-processed unit may be determined. That is, in this application, after the division processing is performed, the current frame may be divided into any quantity of to-be-processed units. This application sets no limitation on the quantity of the to-be-processed units in the current frame.

Exemplarily, in some embodiments, the current frame may be divided into one to-be-processed unit. Correspondingly, the to-be-processed unit may be understood as the current frame, that is, the to-be-processed unit is one frame of a point cloud.

Exemplarily, in some embodiments, the current frame may be divided into N to-be-processed units, where N is an integer greater than 1. Correspondingly, the N to-be-processed units may form the current frame, that is, the N to-be-processed units may form one frame of a point cloud.

It should be noted that, in this embodiment of this application, a to-be-processed unit of the current frame obtained by the division may include at least one point. When encoding the to-be-processed unit, the at least one point in the to-be-processed unit may be used as a to-be-encoded node in the to-be-processed unit.

Exemplarily, in this embodiment of this application, the to-be-processed unit may be a minimum unit corresponding to a process of encoding the current frame. For example, the to-be-processed unit may be a slice obtained by dividing the current frame.

Exemplarily, in some embodiments, after the division processing is performed on the current frame, one corresponding slice may be obtained. Alternatively, after the division processing is performed on the current frame, N corresponding slices may be obtained. For example, as shown in FIG. 41, the current frame may be divided into three to-be-processed units, which are respectively Slice_0, Slice_1, and Slice_2.

Further, in embodiments of this application, each point in a to-be-processed unit corresponds to a piece of geometric information and a piece of attribute information, where the geometric information represents a spatial relationship of the point, and the attribute information represents information related to an attribute of the point.

Herein, the attribute information may be color information, reflectance, or another attribute, which is not specifically limited in embodiments of this application. When the attribute information is color information, the attribute information may be specifically color information in any color space. Exemplarily, the attribute information may be color information in an RGB space, color information in a YUV space, or color information in a YCbCr space, which is not specifically limited in embodiments of this application.

Further, in embodiments of this application, the current frame may be a P-frame. Alternatively, the current frame is a B-frame.

It may be understood that several consecutive images may be classified into three types: P, B, and I. An I-frame (Intra-coded frame) is also referred to as a key frame. The I-frame is an independent frame and does not depend on information about another frame. The I-frame includes complete image information, and therefore has a relatively poor compression effect. However, the I-frame may be independently encoded. A P-frame (Predicted frame) depends on a previous I-frame or a previous P-frame. The P-frame not only stores image information, but also records an image variation. Therefore, the P-frame has a better compression effect than the I-frame. A B-frame (Bidirectional frame) depends on a previous I-frame or P-frame and a next I-frame or P-frame. The B-frame can predict an image from a plurality of directions, and therefore has a better compression effect than the P-frame. However, the B-frame cannot be independently encoded and must be used with a neighboring I-frame or a neighboring P-frame.

It should be noted that, in embodiments of this application, the first reference unit may be a reconstructed unit in the reference frame corresponding to the current frame. Alternatively, the first reference unit may include at least one point. The at least one point in the first reference unit is a reconstructed point, that is, an encoded node in the reference frame.

Further, in determining the first reference unit corresponding to the to-be-processed unit from the reference frame corresponding to the current frame based on the to-be-processed unit in the current frame, dimension information and position information of a bounding box corresponding to the to-be-processed unit may be first determined. Then, the first reference unit is determined from the reference frame based on the dimension information and the position information.

It should be noted that, in embodiments of this application, a size and a position of the bounding box of the to-be-processed unit, that is, the dimension information and the position information of the bounding box corresponding to the to-be-processed unit, may be first determined. Then, the reference frame is searched for a corresponding reference unit by using the dimension information and the position information, to finally obtain a corresponding first reference unit.

It may be understood that, in embodiments of this application, if the first reference unit is determined based on the dimension information and the position information of the bounding box, a size and a position of a bounding box corresponding to the obtained first reference unit may be determined according to the size and the position of the bounding box corresponding to the to-be-processed unit.

Further, in embodiments of this application, in determining the first reference unit from the reference frame based on the dimension information and the position information, partitioning processing may be first performed on the reference frame according to the dimension information and the position information, to determine a first candidate unit corresponding to the to-be-processed unit. Then, the first candidate unit may be determined as the first reference unit.

It may be understood that, in embodiments of this application, the first candidate unit obtained by performing the partitioning processing on the reference frame may be a unit that is in the reference frame and that corresponds to the dimension information and the position information of the bounding box of the to-be-processed unit.

That is, in embodiments of this application, after the dimension information and the position information of the bounding box corresponding to the to-be-processed unit are determined, the first reference unit corresponding to the to-be-processed unit may be directly obtained by partitioning the reference frame according to the dimension information and the position information.

It may be understood that, in embodiments of this application, the size of the bounding box corresponding to the first reference unit may be the same as the size of the bounding box corresponding to the to-be-processed unit. Therefore, the first reference point unit may have a same size as the to-be-processed unit.

It may be understood that, in embodiments of this application, the position of the bounding box corresponding to the first reference unit in the reference frame may be the same as the position of the bounding box corresponding to the to-be-processed unit in the current frame. Therefore, the first reference point unit and the to-be-processed unit may have corresponding positions.

It can be learned that, in embodiments of this application, the first reference unit may be a reference unit that is in the reference frame and that corresponds to a size and a position of the to-be-processed unit. For example, as shown in FIG. 42, the to-be-processed unit is Slice_1 in the current frame. Correspondingly, the first reference unit determined based on the dimension information and the position information of the bounding box corresponding to the to-be-processed unit may be Slice_1 in the reference frame.

Further, in embodiments of this application, in determining the first reference unit from the reference frame based on the dimension information and the position information, partitioning processing may be first performed on the reference frame according to the dimension information and the position information, to determine second candidate units corresponding to the to-be-processed unit. Then, at least one second reference unit corresponding to the to-be-processed unit may be determined from the reference frame based on the second candidate units and the position information. Finally, the first reference unit may be determined from the at least one second reference unit based on a rate-distortion optimal algorithm.

It may be understood that, in embodiments of this application, the second candidate units obtained by performing the partitioning processing on the reference frame may be at least one unit that is in the reference frame and that corresponds to the dimension information and the position information of the bounding box of the to-be-processed unit.

It may be understood that, in embodiments of this application, the at least one second reference unit may be obtained by screening the second candidate units based on the position information of the bounding box. Therefore, the at least one second reference unit may correspond to the position information of the bounding box of the to-be-processed unit.

It should be noted that, in embodiments of this application, the second candidate units may be units directly obtained by performing the partitioning processing on the reference frame, and the second reference unit is obtained by screening the second candidate units by using the position information of the bounding box of the to-be-processed unit. Therefore, the second reference unit may be considered as a unit that is among the second candidate units and that has relatively high correlation with the position of the bounding box of the to-be-processed unit.

Exemplarily, in some embodiments, the second reference unit may include a reference unit that is in the reference frame and that corresponds to the dimension information and the position information of the bounding box corresponding to the to-be-processed unit, or may include another reference unit that is neighboring to the reference frame that corresponds to the dimension information and the position information of the bounding box corresponding to the to-be-processed unit. For example, as shown in FIG. 43, the to-be-processed unit is Slice_1 in the current frame. Correspondingly, the second reference unit determined based on the position information of the bounding box corresponding to the to-be-processed unit may be Slice_0, Slice_1, and Slice_2 in the reference frame.

That is, in embodiments of this application, after the dimension information and the position information of the bounding box corresponding to the to-be-processed unit are determined, at least one second candidate unit corresponding to the to-be-processed unit may be first obtained by partitioning the reference frame according to the dimension information and the position information. Then, at least one second reference unit may be determined from the second candidate unit by using the position information of the bounding box. Finally, the first reference unit may be selected from the at least one second reference unit.

It should be noted that, in embodiments of this application, in determining the first reference unit from the at least one second reference unit, a rate-distortion optimal algorithm may be used to determine an optimal reference unit from the at least one second reference unit as the first reference unit.

It may be understood that, in embodiments of this application, a size of a bounding box corresponding to the second candidate unit, a size of a bounding box corresponding to the second reference unit, and the size of the bounding box corresponding to the first reference unit may be the same as the size of the bounding box corresponding to the to-be-processed unit. Therefore, the second candidate unit, the second reference unit, and the first reference point unit may have a same size as the to-be-processed unit.

It may be understood that, in embodiments of this application, the position of the bounding box corresponding to the first reference unit in the reference frame may be the same as or different from the position of the bounding box corresponding to the to-be-processed unit in the current frame.

It can be learned that, in embodiments of this application, the first reference unit may alternatively not be directly obtained through partitioning, but may be selected from the at least one second reference unit.

Exemplarily, in some embodiments, as shown in FIG. 44, the to-be-processed unit is Slice_1 in the current frame, the second reference unit may be Slice_0, Slice_1, and Slice_2 in the reference frame, and the finally determined optimal first reference unit may be Slice_0 in the reference frame.

Exemplarily, in some embodiments, as shown in FIG. 45, the to-be-processed unit is Slice_1 in the current frame, the second reference unit may be Slice_0, Slice_1, and Slice_2 in the reference frame, and the finally determined optimal first reference unit may be Slice_1 in the reference frame.

Further, in embodiments of this application, in determining the first reference unit from the reference frame based on the dimension information and the position information, partitioning processing may be first performed on the reference frame according to the dimension information and the position information, to determine at least one third reference unit. Then, the first reference unit is determined from the at least one third reference unit based on a rate-distortion optimal algorithm.

It may be understood that, in embodiments of this application, the at least one third reference unit obtained by performing the partitioning processing on the reference frame may be at least one unit that is in the reference frame and that corresponds to the dimension information and the position information of the bounding box of the to-be-processed unit.

That is, in embodiments of this application, after the dimension information and the position information of the bounding box corresponding to the to-be-processed unit are determined, at least one third candidate unit corresponding to the to-be-processed unit may be first obtained by partitioning the reference frame according to the dimension information and the position information. Then, the first reference unit may be selected from the at least one third reference unit.

It should be noted that, in embodiments of this application, in determining the first reference unit from the at least one third reference unit, a rate-distortion optimal algorithm may be used to determine an optimal reference unit from the at least one third reference unit as the first reference unit.

It may be understood that, in embodiments of this application, a size of a bounding box corresponding to the third reference unit and the size of the bounding box corresponding to the first reference unit may be the same as the size of the bounding box corresponding to the to-be-processed unit. Therefore, the third reference unit and the first reference point unit may have a same size as the to-be-processed unit.

It may be understood that, in embodiments of this application, the position of the bounding box corresponding to the first reference unit in the reference frame may be the same as or different from the position of the bounding box corresponding to the to-be-processed unit in the current frame.

It can be learned that, in embodiments of this application, the first reference unit may alternatively not be directly obtained through partitioning, but may be selected from the at least one third reference unit obtained by partitioning.

Exemplarily, in some embodiments, as shown in FIG. 46, the to-be-processed unit is Slice_0 in the current frame, the third reference unit may be Slice_0, Slice_1, and Slice_2 in the reference frame, and the finally determined optimal first reference unit may be Slice_1 in the reference frame.

Exemplarily, in some embodiments, as shown in FIG. 47, the to-be-processed unit is Slice_0 in the current frame, the third reference unit may be Slice_0, Slice_1, and Slice_2 in the reference frame, and the finally determined optimal first reference unit may be Slice_0 in the reference frame.

In conclusion, in embodiments of this application, in performing prediction processing on attribute information of the to-be-processed unit in the current frame, the first reference unit may be first selected from the reference frame. The first reference unit is not limited to the last slice in the reference frame, but may be determined from the reference frame based on the dimension information and the position information of the bounding box corresponding to the to-be-processed unit.

It may be understood that, in embodiments of this application, in determining the first reference unit from the reference frame, the corresponding first reference unit may be directly obtained by partitioning the reference frame according to the dimension information and the position information of the bounding box corresponding to the to-be-processed unit. Alternatively, the reference frame may be first partitioned according to the dimension information and the position information of the bounding box corresponding to the to-be-processed unit, to obtain the second candidate unit, then the at least one second reference unit is determined from the second candidate unit, and finally the optimal first reference unit is selected from the at least one second reference unit. Alternatively, the reference frame may be first partitioned according to the dimension information and the position information of the bounding box corresponding to the to-be-processed unit, to obtain the at least one third reference unit, and finally the optimal first reference unit is selected from the at least one third reference unit.

Further, in embodiments of this application, first, prediction mode identification information corresponding to the current frame may be determined. If a value of the prediction mode identification information is a first value, it is determined that a prediction mode corresponding to the to-be-processed unit is an inter prediction mode; or if a value of the prediction mode identification information is a second value, it is determined that a prediction mode corresponding to the to-be-processed unit is an intra prediction mode.

It may be understood that, in embodiments of this application, the prediction mode identification information may be used to indicate whether inter prediction is used for attribute information of the current frame.

It should be noted that, in embodiments of this application, the first value is different from the second value, and the first value and the second value may be in a parametric form or a numeric form.

Exemplarily, in some embodiments, the value of the prediction mode identification information is determined by using an example in which the first value is set to 1 and the second value is set to 0. If the value of the prediction mode identification information is 1, it may be determined that inter prediction can be used for the attribute information of the current frame. Further, the first reference unit of the to-be-processed unit in the current frame may be determined from the reference frame based on the foregoing method. If the value of the prediction mode identification information is 0, it may be determined that inter prediction cannot be used for the attribute information of the current frame. In this case, prediction processing is performed on the attribute information of the to-be-processed unit in the current frame in a manner of intra prediction.

That is, in embodiments of this application, if it is determined that the value of the prediction mode identification information corresponding to the current frame is the first value, that is, it is determined that the prediction mode corresponding to the to-be-processed unit is the inter prediction mode, a procedure of determining the first reference unit is executed, that is, the processing procedure in step 101 is executed.

Further, in embodiments of this application, if it is determined by decoding a bitstream that the value of the prediction mode identification information corresponding to the current frame is the first value, that is, it is determined that the prediction mode corresponding to the to-be-processed unit is the inter prediction mode, after the first reference unit corresponding to the to-be-processed unit is determined from the reference frame, the reference unit identification information corresponding to the to-be-processed unit may be further determined based on the first reference unit, and then the reference unit identification information is written into the bitstream. Therefore, a decoder may directly determine, based on the reference unit identification information, the first reference unit corresponding to the to-be-processed unit from the reference frame.

It should be noted that, in embodiments of this application, the reference unit identification information corresponding to the to-be-processed unit may indicate identification information such as position information and/or dimension information and/or index information that is of the first reference unit corresponding to the to-be-processed unit and that is in the reference frame. Therefore, the corresponding reference unit indication information may be generated based on the identification information such as the position information and/or the dimension information and/or the index information of the first reference unit in the reference frame, and transmitted to a decoding end.

Correspondingly, in embodiments of this application, the decoding end may directly determine the first reference unit corresponding to the to-be-processed unit from the reference frame by using the reference unit identification information transmitted in the bitstream.

Step 202: Determine, based on attribute information corresponding to the first reference unit, an attribute prediction value corresponding to the to-be-processed unit.

In embodiments of this application, after the first reference unit corresponding to the to-be-processed unit is determined from the reference frame corresponding to the current frame based on the to-be-processed unit in the current frame, the attribute prediction value corresponding to the to-be-processed unit may be further determined based on the attribute information corresponding to the first reference unit.

Further, in embodiments of this application, in determining the attribute prediction value corresponding to the to-be-processed unit based on the attribute information corresponding to the first reference unit, the attribute prediction value corresponding to the to-be-processed unit may be determined based on a reconstructed attribute value of a point in the first reference unit.

It may be understood that, in embodiments of this application, in predicting the attribute information corresponding to the to-be-processed unit, the reconstructed attribute value of the point in the first reference unit may be first determined. Then, attribute information of a point in the to-be-processed unit is predicted by using the reconstructed attribute value of the point in the first reference unit, to obtain a predicted value of the corresponding point. Finally, the attribute prediction value corresponding to the to-be-processed unit may be determined based on the predicted value of the point in the to-be-processed unit.

It should be noted that, in embodiments of this application, the at least one point included in the first reference unit is a reconstructed point, that is, an encoded node. Therefore, in predicting the attribute information of the to-be-processed unit, predicted values of all or some of corresponding points in the to-be-processed unit may be determined based on reconstructed values of all or some of points in the first reference unit, to determine the attribute prediction value corresponding to the to-be-processed unit.

Further, in embodiments of this application, an attribute initial value corresponding to the to-be-processed unit is determined, and then a prediction residual corresponding to the to-be-processed unit is determined based on the attribute initial value and the attribute prediction value.

It may be understood that, in embodiments of this application, after the prediction residual is determined based on the attribute initial value and the attribute prediction value corresponding to the to-be-processed unit, the prediction residual may be written into the bitstream and transmitted to the decoding end, so that the decoding end completes reconstruction of attribute information of the to-be-processed unit by using the prediction residual corresponding to the to-be-processed unit.

It may be understood that, in embodiments of this application, after the attribute prediction value corresponding to the to-be-processed unit is determined, the prediction residual may be estimated with reference to the attribute initial value corresponding to the to-be-processed unit. For example, subtraction calculation may be performed on the attribute initial value and the attribute prediction value corresponding to the to-be-processed unit, to obtain the prediction residual corresponding to the to-be-processed unit.

Further, in embodiments of this application, after the prediction residual corresponding to the to-be-processed unit is determined, a reconstructed attribute value corresponding to the to-be-processed unit may be determined based on the prediction residual and the attribute prediction value.

It may be understood that, in embodiments of this application, after the attribute prediction value corresponding to the to-be-processed unit is determined, reconstruction processing may be performed on the attribute information of the to-be-processed unit by using the attribute prediction value. The reconstructed attribute value corresponding to the to-be-processed unit may be determined based on the predicted residual and the attribute prediction value corresponding to the to-be-processed unit.

Exemplarily, in some embodiments, summation calculation may be performed on the prediction residual and the attribute prediction value corresponding to the to-be-processed unit, to obtain the reconstructed attribute value corresponding to the to-be-processed unit.

Further, in embodiments of this application, after the reconstruction processing on the attribute information of the to-be-processed unit is completed, and the corresponding reconstructed attribute value is obtained, the reconstructed attribute value corresponding to the to-be-processed unit may be stored.

It may be understood that, in embodiments of this application, the reconstructed attribute value corresponding to the to-be-processed unit in the current frame is stored, so that in a subsequent decoding procedure, the stored reconstructed attribute value corresponding to the to-be-processed unit in the current frame can be used to perform inter prediction on attribute information of a to-be-processed unit in another frame.

It should be noted that, in embodiments of this application, the reconstructed attribute value corresponding to the to-be-processed unit may be stored once the attribute information of the to-be-processed unit is reconstructed, or reconstructed attribute values of all to-be-processed units in the current frame may be stored only after all of them are obtained.

It can be learned that, in embodiments of this application, in performing attribute inter prediction on an attribute of a point cloud, all points in a reference frame and attributes of the points may be stored in advance. In encoding or decoding an attribute of a point in a predicted frame subsequently, the points in the reference frame are partitioned according to a size and a position corresponding to each to-be-processed unit (for example, a slice) in the predicted frame, to acquire a prediction unit (first reference unit) that corresponds to the to-be-processed unit and that is in the reference frame. Further, attribute inter prediction may be performed on a to-be-processed unit in a current frame by using the prediction unit in the reference frame.

Exemplarily, in some embodiments, it is assumed that the to-be-processed unit is a current slice that is in the current frame and that is to be encoded and decoded. In this case, it may be first determined whether inter prediction is used to predict the attribute information of the current frame. If attribute inter prediction is used for the current frame, a prediction reference unit (first reference unit) corresponding to the current slice may be acquired from the reference frame by using dimension information and position information of a bounding box corresponding to the current slice. Then, inter prediction is performed on attribute information of the current slice by using a reconstructed attribute value of the prediction reference unit, to obtain an attribute prediction value of the current slice, thereby completing reconstruction of the attribute information of the current slice. Each slice in the current frame is sequentially processed according to the foregoing method. After the last slice of the current frame is encoded, reconstructed attribute values of all point clouds of the current frame may be stored for attribute inter prediction of a subsequent frame.

In conclusion, in embodiments of this application, in performing attribute inter prediction, the prediction reference unit (first reference unit) of the current slice unit (to-be-processed unit) that is to be encoded and decoded may be acquired from the reference frame by using the dimension information and the position information of the bounding box. In this way, attribute redundancy between neighboring frames can be further removed, and attribute interframe encoding efficiency of a point cloud can be further improved.

It should be noted that, in embodiments of this application, the corresponding prediction reference unit may be directly obtained from the reference frame by using the dimension information and the position information of the bounding box of the current slice unit that is to be encoded and decoded. Alternatively, a plurality of neighboring reference units (second reference units or third reference units) may be acquired from the reference frame by using the dimension information and the position information of the bounding box of the current slice unit that is to be encoded and decoded, and then a rate-distortion optimal criterion is used to obtain an optimal prediction unit (first reference unit).

Exemplarily, in some embodiments, as shown in FIG. 48, for to-be-processed units Slice_0, Slice_1, Slice_2, and Slice_3 in the current frame, the reference frame is directly partitioned according to dimension information and position information of bounding boxes corresponding to the to-be-processed units, to obtain corresponding first reference units, which are respectively Slice_0, Slice_1, Slice_2, and Slice_3 in the reference frame.

Exemplarily, in some embodiments, as shown in FIG. 49, for a to-be-processed unit Slice_2 in the current frame, corresponding second candidate units, that is, Slice_0, Slice_1, Slice_2, and Slice_3 in the reference frame, may be obtained by partitioning the reference frame according to dimension information and position information of a bounding box corresponding to the to-be-processed unit. Then, second reference units corresponding to the to-be-processed unit, that is, Slice_1, Slice_2, and Slice_3, are determined from the second candidate units. Finally, a rate-distortion optimal algorithm is used to determine that the first reference unit is Slice_3.

Exemplarily, in some embodiments, as shown in FIG. 50, for a to-be-processed unit Slice_0 in the current frame, corresponding third reference units, that is, Slice_0, Slice_1, Slice_2, and Slice_3 in the reference frame, may be obtained by partitioning the reference frame according to dimension information and position information of a bounding box corresponding to the to-be-processed unit. Then, a rate-distortion optimal algorithm is used to determine, from the third reference units, a first reference unit corresponding to the to-be-processed unit, that is, Slice_1.

Exemplarily, in some embodiments, as shown in FIG. 51, for to-be-processed units Slice_0, Slice_1, Slice_2, and Slice_3 in the current frame, corresponding third reference units, that is, Slice_0, Slice_1, Slice_2, and Slice_3 in the reference frame, may be obtained by partitioning the reference frame according to dimension information and position information of bounding boxes corresponding to the to-be-processed units. Then, a rate-distortion optimal algorithm is used to separately determine, from the third reference units, first reference units corresponding to the to-be-processed units, where first reference units corresponding to Slice_0, Slice_1, and Slice_2 are all Slice_1, and a first reference unit corresponding to Slice_3 is Slice_2.

It can be learned that, in embodiments of this application, a corresponding prediction reference unit may be acquired from a prediction frame by using a size and a position of a current slice that is to be encoded and decoded, and then inter prediction may be performed on an attribute of a point in the current slice by using an attribute of the prediction reference unit. The corresponding prediction reference unit may be obtained from a reference frame by using a size and a position of a bounding box of the current slice, or an optimal prediction reference unit may be selected by using a rate-distortion optimal criterion.

That is, in embodiments of this application, in performing the attribute inter prediction on the attribute of the point in the current slice of a current frame, a corresponding slice prediction unit may be obtained from the reference frame according to the size and the position of the bounding box of the current slice. Then, a neighboring slice unit is acquired based on the bounding box of the slice. Then, a rate-distortion optimal criterion is used to acquire an optimal prediction unit as a prediction reference unit. Finally, inter prediction may be performed on attribute information of the current slice by using a reconstructed attribute value of the optimal prediction reference unit.

An embodiment of this application provides an encoding method. An encoder determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

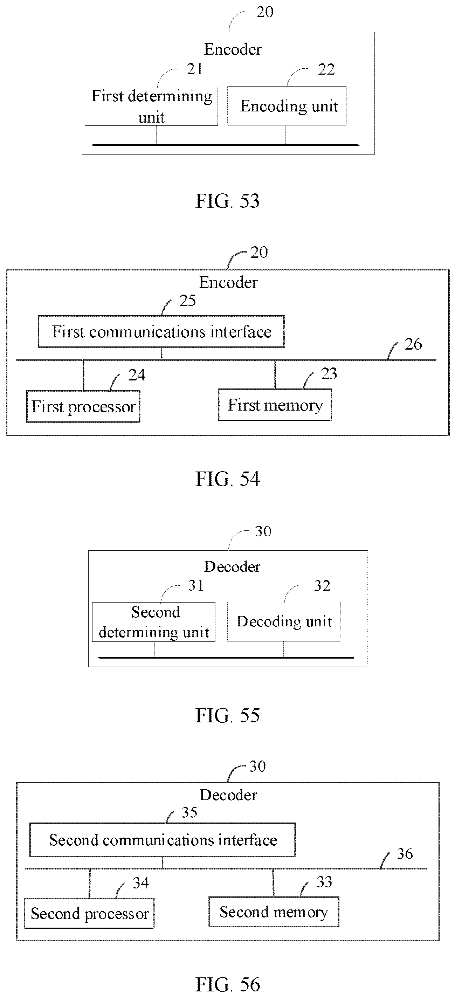

Based on the foregoing embodiments, in still another embodiment of this application, based on a same invention concept as the foregoing embodiments, FIG. 53 is a schematic structural diagram 1 of an encoder. As shown in FIG. 53, the encoder 20 may include a first determining unit 21 and an encoding unit 22.

The first determining unit 21 is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

In some embodiments, the first determining unit 21 is further configured to: determine dimension information and position information of a bounding box corresponding to the to-be-processed unit; and determine, based on the dimension information and the position information, the first reference unit from the reference frame.

In some embodiments, the first determining unit 21 is further configured to: perform partitioning processing on the reference frame according to the dimension information and the position information, to determine a first candidate unit corresponding to the to-be-processed unit; and determine the first candidate unit as the first reference unit.

In some embodiments, the first determining unit 21 is further configured to: perform partitioning processing on the reference frame according to the dimension information and the position information, to determine a second candidate unit corresponding to the to-be-processed unit; determine, based on the second candidate unit and the position information, at least one second reference unit corresponding to the to-be-processed unit from the reference frame; and determine the first reference unit from the at least one second reference unit based on a rate-distortion optimal algorithm.

In some embodiments, the first determining unit 21 is further configured to: perform partitioning processing on the reference frame according to the dimension information and the position information, to determine at least one third reference unit; and determine the first reference unit from the at least one third reference unit based on a rate-distortion optimal algorithm.

In some embodiments, the first determining unit 21 is further configured to determine, based on a reconstructed attribute value of a point in the first reference unit, the attribute prediction value corresponding to the to-be-processed unit.

In some embodiments, the first determining unit 21 is further configured to perform division processing on the current frame, to determine at least one to-be-processed unit.

In some embodiments, the first determining unit 21 is further configured to: determine prediction mode identification information corresponding to the current frame; and if a value of the prediction mode identification information is a first value, determine that a prediction mode corresponding to the to-be-processed unit is an inter prediction mode; or if a value of the prediction mode identification information is a second value, determine that a prediction mode corresponding to the to-be-processed unit is an intra prediction mode.

In some embodiments, the first determining unit 21 is further configured to: if the prediction mode corresponding to the to-be-processed unit is the inter prediction mode, execute a procedure of determining the first reference unit.

In some embodiments, the first determining unit 21 is further configured to: if the prediction mode corresponding to the to-be-processed unit is the inter prediction mode, determine, based on the first reference unit, reference unit identification information corresponding to the to-be-processed unit.

In some embodiments, the encoding unit 22 is configured to write the reference unit identification information into a bitstream.

In some embodiments, the first determining unit 21 is further configured to: determine an attribute initial value corresponding to the to-be-processed unit; and determine, based on the attribute initial value and the attribute prediction value, a prediction residual corresponding to the to-be-processed unit.

In some embodiments, the encoding unit 22 is further configured to write the prediction residual into a bitstream.

In some embodiments, the reconstructed attribute value corresponding to the to-be-processed unit is stored.

In some embodiments, the current frame is a P-frame. Alternatively, the current frame is a B-frame.

It may be understood that in embodiments, the term "unit" may be a partial circuit, a partial processor, a partial program or software, or the like. Certainly, the term "unit" may be a module or may be in a non-modular form. In addition, component parts in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer-readable storage medium, applied to an encoder 20. The computer-readable storage medium stores a computer program, and the computer program is executed by a first processor to implement the method according to any one of the foregoing embodiments.

Based on the foregoing composition of the encoder 20 and the computer-readable storage medium, FIG. 54 is a schematic structural diagram 2 of an encoder. As shown in FIG. 54, the encoder 20 may include a first memory 23, a first processor 24, a first communications interface 25, and a first bus system 26. The first memory 23, the first processor 24, and the first communications interface 25 are coupled together by using the first bus system 26. It may be understood that the first bus system 26 is configured to implement connection and communication between these components. The first bus system 26 may further include a power bus, a control bus, a status signal bus, and the like in addition to a data bus. However, for clarity of description, various buses are all marked as the first bus system 26.

The first communications interface 25 is configured to receive and transmit signals in the process of transmitting and receiving information with other external network elements.

The first memory 23 is configured to store a computer program runnable on the first processor.

The first processor 24 is configured to: when running the computer program, determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

It may be understood that, in embodiments of this application, the first memory 23 may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The first memory 23 in the systems and the methods described in this application include but are not limited to these memories and any memory of another appropriate type.

However, the first processor 24 may be an integrated circuit chip having a signal processing capability. In an implementation process, steps in the foregoing method may be implemented by using a hardware integrated logical circuit in the first processor 24, or by using instructions in a form of software. The foregoing first processor 24 may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an erasable programmable memory, or a register. The storage medium is located in the first memory 23, and the first processor 24 reads information in the first memory 23 and completes the steps of the foregoing methods in combination with hardware of the first processor.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the techniques described in this application can be implemented by modules (such as processes and functions) that execute the functions described in this application. Software code may be stored in a memory and executed by a processor. The memory may be implemented in the processor or outside the processor.

Optionally, in another embodiment, the first processor 24 is further configured to run the computer program to execute the method according to any one of the foregoing embodiments.

An embodiment of this application provides an encoder. The encoder determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

FIG. 55 is a schematic structural diagram 1 of a decoder. As shown in FIG. 55, a decoder 30 may include a second determining unit 31 and a decoding unit 32.

The second determining unit 31 is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

In some embodiments, the second determining unit 31 is further configured to: determine dimension information and position information of a bounding box corresponding to the to-be-processed unit; and determine, based on the dimension information and the position information, the first reference unit from the reference frame.

In some embodiments, the second determining unit 31 is further configured to: perform partitioning processing on the reference frame according to the dimension information and the position information, to determine a first candidate unit corresponding to the to-be-processed unit; and determine the first candidate unit as the first reference unit.

In some embodiments, the second determining unit 31 is further configured to: perform partitioning processing on the reference frame according to the dimension information and the position information, to determine a second candidate unit corresponding to the to-be-processed unit; determine, based on the second candidate unit and the position information, at least one second reference unit corresponding to the to-be-processed unit from the reference frame;

and determine the first reference unit from the at least one second reference unit.

In some embodiments, the second determining unit 31 is further configured to: perform partitioning processing on the reference frame according to the dimension information and the position information, to determine at least one third reference unit; and determine the first reference unit from the at least one third reference unit.

In some embodiments, the second determining unit 31 is further configured to determine, based on a reconstructed attribute value of a point in the first reference unit, the attribute prediction value corresponding to the to-be-processed unit.

In some embodiments, the second determining unit 31 is further configured to perform division processing on the current frame, to determine at least one to-be-processed unit.

In some embodiments, the decoding unit 32 is configured to decode a bitstream.

In some embodiments, the second determining unit 31 is further configured to: determine prediction mode identification information corresponding to the current frame; and if a value of the prediction mode identification information is a first value, determine that a prediction mode corresponding to the to-be-processed unit is an inter prediction mode; or if a value of the prediction mode identification information is a second value, determine that a prediction mode corresponding to the to-be-processed unit is an intra prediction mode.

In some embodiments, the second determining unit 31 is further configured to: if the prediction mode corresponding to the to-be-processed unit is the inter prediction mode, execute a procedure of determining the first reference unit.

In some embodiments, the second determining unit 31 is further configured to: if the prediction mode corresponding to the to-be-processed unit is the inter prediction mode, decode the bitstream, to determine reference unit identification information corresponding to the to-be-processed unit; and determine, based on the reference unit identification information, the first reference unit from the reference frame.

In some embodiments, the decoding unit 32 is further configured to decode a bitstream.

In some embodiments, the second determining unit 31 is further configured to: determine a prediction residual corresponding to the to-be-processed unit; and determine, based on the prediction residual and the attribute prediction value, a reconstructed attribute value corresponding to the to-be-processed unit.

In some embodiments, the reconstructed attribute value corresponding to the to-be-processed unit is stored.

In some embodiments, the current frame is a P-frame. Alternatively, the current frame is a B-frame.

It may be understood that in embodiments, the term "unit" may be a partial circuit, a partial processor, a partial program or software, or the like. Certainly, the term "unit" may be a module or may be in a non-modular form. In addition, component parts in embodiments may be integrated into one processing unit, or each of the units may exist alone physically, or two or more units may be integrated into one unit. The foregoing integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor (processor) to execute all or some of the steps of the methods described in the embodiments. The foregoing storage medium includes various media that may store a program code, such as a USB flash drive, a removable hard disk, a read-only memory (Read Only Memory, ROM), a random access memory (Random Access Memory, RAM), a magnetic disk, or an optical disc.

Therefore, an embodiment of this application provides a computer-readable storage medium, applied to the decoder 30. The computer-readable storage medium stores a computer program, and the computer program is executed by a first processor to implement the method in any one of the foregoing embodiments.

Based on the foregoing composition of the decoder 30 and the computer-readable storage medium, FIG. 56 is a second schematic structural diagram of composition of a decoder. As shown in FIG. 56, the decoder 30 may include a second memory 33, a second processor 34, a second communications interface 35, and a second bus system 36. The second memory 33, the second processor 34, and the second communications interface 35 are coupled together by using the second bus system 36. It may be understood that the second bus system 36 is configured to implement connection and communication between these components. The second bus system 36 may further include a power bus, a control bus, a status signal bus, and the like, in addition to a data bus. However, for clarity of description, various buses are all marked as the second bus system 36.

The second communications interface 35 is configured to receive and transmit a signal in a process of transmitting and receiving information between the second communications interface and another external network element.

The second memory 33 is configured to store a computer program runnable on the second processor.

The second processor 34 is configured to: when running the computer program, determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

It may be understood that the second memory 33 in this embodiment of this application may be a volatile memory or a nonvolatile memory, or may include a volatile memory and a nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example rather than limitative description, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The second memory 33 in the system and the method described in this application is to include but is not limited to these memories and a memory of any other proper type.

The second processor 34 may be an integrated circuit chip and has a signal processing capability. In an implementation process, the steps of the foregoing methods may be completed by using an integrated logic circuit of hardware in the second processor 34 or an instruction in a form of software. The second processor 34 may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logical device, a discrete gate or transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly executed by a hardware decoding processor, or executed by a combination of hardware and software modules in the decoding processor. The software module may be located in a mature storage medium in the art, for example, a random access memory, a flash memory, a read-only memory, a programmable read-only memory, an erasable programmable memory, or a register. The storage medium is located in the second memory 33. The second processor 34 reads information from the second memory 33, and completes the steps of the foregoing methods in combination with hardware thereof.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units configured to execute the functions described in this application, or a combination thereof. For software implementation, the techniques described in this application can be implemented by modules (such as processes and functions) that execute the functions described in this application. Software code may be stored in a memory and executed by a processor. The memory may be implemented in the processor or outside the processor.

An embodiment of this application provides a decoder. The decoder determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit may be selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

In still another embodiment of this application, an embodiment of this application further provides a bitstream, where the bitstream is generated by performing bit encoding according to to-be-encoded information, where the to-be-encoded information includes at least prediction mode identification information, a prediction residual, and reference unit identification information.

It should be noted that, in embodiments of this application, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of further restrictions, the element limited by the sentence "including a ......" does not exclude the existence of other identical elements in the process, method, item or device including this element.

The foregoing sequence numbers of embodiments of this application are merely described, and do not represent advantages or disadvantages of the embodiments.

The methods disclosed in the several method embodiments provided in this application may be randomly combined without conflict to obtain new method embodiments.

The features disclosed in the several product embodiments provided in this application may be randomly combined without conflict to obtain a new product embodiment.

The several methods or features disclosed in the device embodiments provided in this application may be randomly combined without conflict to obtain a new method embodiment or device embodiment.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

### Industrial practicality

Embodiments of this application provide an encoding method, a decoding method, an encoder, a decoder, a bitstream, and a storage medium. A codec determines, based on a to-be-processed unit in a current frame, a first reference unit corresponding to the to-be-processed unit from a reference frame corresponding to the current frame; and determines, based on attribute information corresponding to the first reference unit, an attribute prediction value corresponding to the to-be-processed unit. It can be learned that, in embodiments of this application, when a codec performs attribute inter prediction on a current frame, for a to-be-processed unit in the current frame, a first reference unit corresponding to the to-be-processed unit is selected from a reference frame, and then the first reference unit is used to complete prediction processing on attribute information of the to-be-processed unit, to obtain a corresponding attribute prediction value. Because the first reference unit is determined according to the to-be-processed unit, there is a relatively strong correlation between the two units, so that attribute redundancy between neighboring frames can be effectively removed, attribute encoding and decoding efficiency of a point cloud can be improved, and encoding and decoding performance of the point cloud can be enhanced.

### Claims

1. A decoding method, applied to a decoder, wherein the method comprises:

   determining, based on a to-be-processed unit in a current frame, a first reference unit corresponding to the to-be-processed unit from a reference frame corresponding to the current frame; and
   determining, based on attribute information corresponding to the first reference unit, an attribute prediction value corresponding to the to-be-processed unit.

2. The method according to claim 1, wherein the determining, based on the to-be-processed unit in the current frame, the first reference unit corresponding to the to-be-processed unit from the reference frame corresponding to the current frame comprises:

   determining dimension information and position information of a bounding box corresponding to the to-be-processed unit; and
   determining, based on the dimension information and the position information, the first reference unit from the reference frame.

3. The method according to claim 2, wherein the determining, based on the dimension information and the position information, the first reference unit from the reference frame comprises:

   performing partitioning processing on the reference frame according to the dimension information and the position information, to determine a first candidate unit corresponding to the to-be-processed unit; and
   determining the first candidate unit as the first reference unit.

4. The method according to claim 2, wherein the determining, based on the dimension information and the position information, the first reference unit from the reference frame comprises:

performing partitioning processing on the reference frame according to the dimension information and the position information, to determine a second candidate unit corresponding to the to-be-processed unit;
determining, based on the second candidate unit and the position information, at least one second reference unit corresponding to the to-be-processed unit from the reference frame; and
determining the first reference unit from the at least one second reference unit.

5. The method according to claim 2, wherein the determining, based on the dimension information and the position information, the first reference unit from the reference frame comprises:

performing partitioning processing on the reference frame according to the dimension information and the position information, to determine at least one third reference unit; and
determining the first reference unit from the at least one third reference unit.

6. The method according to any one of claims 1 to 5, wherein the determining, based on the attribute information corresponding to the first reference unit, the attribute prediction value corresponding to the to-be-processed unit comprises:
determining, based on a reconstructed attribute value of a point in the first reference unit, the attribute prediction value corresponding to the to-be-processed unit.

7. The method according to claim 1, wherein the method further comprises:
performing division processing on the current frame, to determine at least one to-be-processed unit.

8. The method according to claim 2, further comprising:

decoding a bitstream, to determine prediction mode identification information corresponding to the current frame; and
in a case that a value of the prediction mode identification information is a first value, determining that a prediction mode corresponding to the to-be-processed unit is an inter prediction mode; or
in a case that a value of the prediction mode identification information is a second value, determining that a prediction mode corresponding to the to-be-processed unit is an intra prediction mode.

9. The method according to claim 8, wherein the method further comprises:
in a case that the prediction mode corresponding to the to-be-processed unit is the inter prediction mode, executing a procedure of determining the first reference unit.

10. The method according to claim 8, wherein the method further comprises:

in a case that the prediction mode corresponding to the to-be-processed unit is the inter prediction mode, decoding the bitstream, to determine reference unit identification information corresponding to the to-be-processed unit; and
determining, based on the reference unit identification information, the first reference unit from the reference frame.

11. The method according to claim 1, wherein the method further comprises:

decoding a bitstream, to determine a prediction residual corresponding to the to-be-processed unit; and
determining, based on the prediction residual and the attribute prediction value, a reconstructed attribute value corresponding to the to-be-processed unit.

12. The method according to claim 11, wherein the method further comprises:
storing the reconstructed attribute value corresponding to the to-be-processed unit.

13. The method according to claim 1, wherein

the current frame is a P-frame; or

the current frame is a B-frame.

14. An encoding method, applied to an encoder, wherein the method comprises:

determining, based on a to-be-processed unit in a current frame, a first reference unit corresponding to the to-be-processed unit from a reference frame corresponding to the current frame; and
determining, based on attribute information corresponding to the first reference unit, an attribute prediction value corresponding to the to-be-processed unit.

15. The method according to claim 14, wherein the determining, based on the to-be-processed unit in the current frame, the first reference unit corresponding to the to-be-processed unit from the reference frame corresponding to the current frame comprises:

determining dimension information and position information of a bounding box corresponding to the to-be-processed unit; and
determining, based on the dimension information and the position information, the first reference unit from the reference frame.

16. The method according to claim 15, wherein the determining, based on the dimension information and the position information, the first reference unit from the reference frame comprises:

performing partitioning processing on the reference frame according to the dimension information and the position information, to determine a first candidate unit corresponding to the to-be-processed unit; and
determining the first candidate unit as the first reference unit.

17. The method according to claim 15, wherein the determining, based on the dimension information and the position information, the first reference unit from the reference frame comprises:

performing partitioning processing on the reference frame according to the dimension information and the position information, to determine a first candidate unit corresponding to the to-be-processed unit; and
determining, based on the first candidate unit and the position information, at least one second reference unit corresponding to the to-be-processed unit from the reference frame; and
determining, based on a rate-distortion optimal algorithm, the first reference unit from the at least one second reference unit.

18. The method according to claim 15, wherein the determining, based on the dimension information and the position information, the first reference unit from the reference frame comprises:

performing partitioning processing on the reference frame according to the dimension information and the position information, to determine at least one third reference unit; and
determining, based on a rate-distortion optimal algorithm, the first reference unit from the at least one third reference unit.

19. The method according to any one of claims 14 to 18, wherein the determining, based on the attribute information corresponding to the first reference unit, the attribute prediction value corresponding to the to-be-processed unit comprises:
determining, based on a reconstructed attribute value of a point in the first reference unit, the attribute prediction value corresponding to the to-be-processed unit.

20. The method according to claim 14, wherein the method further comprises:
performing division processing on the current frame, to determine at least one to-be-processed unit.

21. The method according to claim 15, further comprising:

determining prediction mode identification information corresponding to the current frame; and
in a case that a value of the prediction mode identification information is a first value, determining that a prediction mode corresponding to the to-be-processed unit is an inter prediction mode; or
in a case that a value of the prediction mode identification information is a second value, determining that a prediction mode corresponding to the to-be-processed unit is an intra prediction mode.

22. The method according to claim 21, wherein the method further comprises:
in a case that the prediction mode corresponding to the to-be-processed unit is the inter prediction mode, executing a procedure of determining the first reference unit.

23. The method according to claim 21, wherein the method further comprises:

in a case that the prediction mode corresponding to the to-be-processed unit is the inter prediction mode, determining, based on the first reference unit, reference unit identification information corresponding to the to-be-processed unit; and
writing the reference unit identification information into a bitstream.

24. The method according to claim 14, wherein the method further comprises:

determining an attribute initial value corresponding to the to-be-processed unit; and
determining, based on the attribute initial value and the attribute prediction value, a prediction residual corresponding to the to-be-processed unit, and writing the prediction residual into a bitstream.

25. The method according to claim 24, wherein the method further comprises:
storing the reconstructed attribute value corresponding to the to-be-processed unit.

26. The method according to claim 14, wherein

the current frame is a P-frame; or
the current frame is a B-frame.

27. An encoder, wherein the encoder comprises a first determining unit, wherein
the first determining unit is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

28. An encoder, wherein the encoder comprises a first memory and a first processor, wherein

the first memory is configured to store a computer program runnable on the first processor; and
the first processor is configured to execute the method according to any one of claims 14 to 26 when running the computer program.

29. A decoder, wherein the decoder comprises a second determining unit, wherein
the second determining unit is configured to: determine, based on a to-be-processed unit in a current frame, a first reference unit corresponding to the to-be-processed unit from a reference frame corresponding to the current frame; and determine, based on attribute information corresponding to the first reference unit, an attribute prediction value corresponding to the to-be-processed unit.

30. A decoder, wherein the decoder comprises a second memory and a second processor, wherein

the second memory is configured to store a computer program runnable on the second processor; and
the second processor is configured to execute the method according to any one of claims 1 to 13 when running the computer program.

31. A bitstream, wherein the bitstream is generated by performing bit encoding according to to-be-encoded information, wherein the to-be-encoded information comprises at least prediction mode identification information, a prediction residual, and reference unit identification information.

32. A computer-readable storage medium, wherein the computer-readable storage medium stores a computer program, and when the computer program is executed, the method according to any one of claims 1 to 13 or the method according to any one of claims 14 to 26 is implemented.

FIG. 1A

FIG. 1B

FIG. 2A

```
1   ply
2   format ascii 1.0
3   element vertex 207242
4   property float x
5   property float y
6   property float z
7   property uchar red
8   property uchar green
9   property uchar blue
10  end_ header
11  75 318 0 0 142 0
12  75 319 0 0 143 0
13  75 319 1 1 9 9
14  77 315 0 1 9 9
```

FIG. 2B

FIG. 3

FIG. 4A

FIG. 4B

Low plane in a Z-axis direction

(a)  (a0)  (a1)  (a2)  (a3)

FIG. 5A

High plane in a Z-axis direction

(b)    (b0)    (b1)    (b2)    (b3)

FIG. 5B

FIG. 6

Planar mode planeMode_z = true

Planar position planePosition_z = low

FIG. 7A

Planar mode planeMode_z = false

FIG. 7B

FIG. 8

FIG. 9

FIG. 10

FIG. 11

FIG. 12

FIG. 13

Direct mode (DM)

P

Standard eight sub-cube mode

P

FIG. 14

FIG. 15

Encoded point

Current point

$n*\Delta\varphi_h$

$\varphi_{al}$

$\varphi_{pred}$

FIG. 16

Predicting an angle of a Y-plane
by using a horizontal azimuth

FIG. 17

Predicting an angle of an X-plane
by using a horizontal azimuth

FIG. 18

FIG. 19

FIG. 20

FIG. 21

FIG. 22

Three
neighboring
points of
the K$^{th}$
point

```
Original          Attribute                    Prediction                                Arithmetic        Attribute
point       →     prediction  →  ( − )    →    residual    →   Quantization  →           encoding    →     bit rate
cloud
```

Original attribute value
of the K$^{th}$ point

FIG. 23

FIG. 24

FIG. 25

P0    P1        P4          P3
P6        P7
P9
P5        P8    P2

Original
sequence

P0, P1, P2, P3, P4, P5, P6, P7, P8, P9

Sequence of LOD
layers

P0, P5, P4, P2    P1, P6, P3    P9, P8, P7

LOD0

LOD1

LOD2

FIG. 26

Current
point

Spatial
block

FIG. 27

Six connections          18 connections          26 connections

FIG. 28

FIG. 29

FIG. 30

FIG. 31

FIG. 32

Search
range

Search
range

Search
center

Level 2

B-N²    B-N    B-3    B-2    B-1    B    B+1    B+2    B+N    B+N²

Level 1

Reference
frame

BB-N    BB-3    BB-2    BB-1    BB    BB+1    BB+2    BB+N

Level 0

Current
point

Current
frame

FIG. 33

FIG. 34

FIG. 35

$w_{3,0}=1$  $w_{3,1}=1$  $w_{3,3}=1$  $w_{3,4}=1$  $w_{3,5}=1$

$g_{3,0}$  $g_{3,1}$  $g_{3,3}$  $g_{3,4}$  $g_{3,5}$

$w_{2,0}=2$  $w_{2,1}=1$  $w_{2,2}=2$

$g_{2,0}$  $h_{2,0}$  $g_{2,1}$  $g_{2,2}$  $h_{2,2}$

$w_{1,0}=3$  $w_{1,1}=2$

$g_{1,0}$  $h_{1,0}$  $g_{1,1}$

$w_{0,0}=5$

$g_{0,0}$  $h_{0,0}$

Quantization, entropy encoding, and transform

$h_{0,0}$  $g_{0,0}$

$w_{0,0}=5$

$g'_{1,1}$  $h'_{1,0}$  $g'_{1,0}$

$w_{1,1}=2$  $w_{1,0}=3$

$h'_{2,2}$  $g'_{2,2}$  $g'_{2,1}$  $h'_{2,0}$  $g'_{2,0}$

$w_{2,2}=2$  $w_{2,1}=1$  $w_{2,0}=2$

$g'_{3,5}$  $g'_{3,4}$  $g'_{3,3}$  $g'_{3,1}$  $g'_{3,0}$

$w_{3,5}=1$  $w_{3,4}=1$  $w_{3,3}=1$  $w_{3,1}=1$  $w_{3,0}=1$

FIG. 36

$g'_{L,2x,y,z}$ —— $a$ —— $\oplus$ —— $g'_{L-1,x,y,z}$

$b$

$-b$

$g'_{L,2x+1,y,z}$ —— $a$ —— $\oplus$ —— $f'_{L-1,x,y,z}$

FIG. 37

$g'_{L-1,x,y,z}$ —— $a$ —— $\oplus$ —— $g'_{L,2x,y,z}$

$-b$

$b$

$f'_{L-1,x,y,z}$ —— $a$ —— $\oplus$ —— $g'_{L,2x+1,y,z}$

FIG. 38

Reference frame          Current frame

Slice_0          Slice_0

Slice_1          Slice_1

Slice_2          Slice_2

Slice_3          Slice_3

FIG. 39

Determine, based on a to-be-processed unit in a current frame, a first reference unit corresponding to the to-be-processed unit from a reference frame corresponding to the current frame — 101

Determine, based on attribute information corresponding to the first reference unit, an attribute prediction value corresponding to the to-be-processed unit — 102

FIG. 40

FIG. 41          FIG. 42          FIG. 43

FIG. 44          FIG. 45          FIG. 46

Reference frame    Current frame

FIG. 47

Reference frame    Current frame

Slice_0 → Slice_0
Slice_1 → Slice_1
Slice_2 → Slice_2
Slice_3 → Slice_3

FIG. 48

Reference frame    Current frame

Slice_0
Slice_1
Slice_2 → Slice_2
Slice_3

FIG. 49

Reference frame    Current frame

Slice_0    Slice_0
Slice_1    
Slice_2    
Slice_3    

FIG. 50

Reference frame    Current frame

Slice_0 → Slice_0
Slice_1 → Slice_1
Slice_2 → Slice_2
Slice_3 → Slice_3

FIG. 51

Determine, based on a to-be-processed unit in a current frame, a first reference unit corresponding to the to-be-processed unit from a reference frame corresponding to the current frame — 201

Determine, based on attribute information corresponding to the first reference unit, an attribute prediction value corresponding to the to-be-processed unit — 202

FIG. 52

20

Encoder

21

First determining unit

22

Encoding unit

FIG. 53

20

Encoder

25

First communications interface

26

24

First processor

23

First memory

FIG. 54

30

Decoder

31

Second determining unit

32

Decoding unit

FIG. 55

30

Decoder

35

Second communications interface

36

34

Second processor

33

Second memory

FIG. 56

<div style="text-align:center">**INTERNATIONAL SEARCH REPORT**</div>

| International application No. |
|---|
| **PCT/CN2023/086968** |

**A. CLASSIFICATION OF SUBJECT MATTER**

H04N 19/105(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI: 编码, 解码, 点云, 参考帧, 参考单元, 预测, 帧间, 帧内, 尺寸, 位置, 大小, 点云, CU, PU, encod+, decod+, predict, point, cloud, size, position

**C. DOCUMENTS CONSIDERED TO BE RELEVANT**

| Category* | Citation of document, with indication, where appropriate, of the relevant passages | Relevant to claim No. |
|---|---|---|
| X | CN 103079072 A (TSINGHUA UNIVERSITY et al.) 01 May 2013 (2013-05-01) claims 1-28, and description, paragraphs [0002]-[0119] | 1-32 |
| A | CN 107105291 A (ELECTRONICS AND TELECOMMUNICATIONS RESEARCH INSTITUTE) 29 August 2017 (2017-08-29) entire document | 1-32 |
| A | CN 108965869 A (HUAWEI TECHNOLOGIES CO., LTD. et al.) 07 December 2018 (2018-12-07) entire document | 1-32 |
| A | CN 110913232 A (BEIJING SUMAVISION TECHNOLOGIES CO., LTD.) 24 March 2020 (2020-03-24) entire document | 1-32 |
| A | CN 112235582 A (TENCENT TECHNOLOGY (SHENZHEN) CO., LTD.) 15 January 2021 (2021-01-15) entire document | 1-32 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 November 2023** | **05 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/086968** |

| Patent document cited in search report | | | Publication date (day/month/year) | Patent family member(s) | Publication date (day/month/year) |
| --- | --- | --- | --- | --- | --- |
| CN | 103079072 | A | 01 May 2013 | None | |
| CN | 107105291 | A | 29 August 2017 | None | |
| CN | 108965869 | A | 07 December 2018 | None | |
| CN | 110913232 | A | 24 March 2020 | None | |
| CN | 112235582 | A | 15 January 2021 | None | |

Form PCT/ISA/210 (patent family annex) (July 2022)